# EUROPÄISCHE PATENTSCHRIFT

(11) **EP 3 960 663 B1**
(45) Veröffentlichungstag und Bekanntmachung des Hinweises auf die Patenterteilung: **01.03.2023**
(21) Anmeldenummer: 21190886.8
(22) Anmeldetag: 11.08.2021
(51) Int. Cl.: B21D 51/26, B21D 51/30, B67C 3/26, B67C 3/24, B65G 17/00

(54) **VORRICHTUNG UND VERFAHREN ZUM BEHANDELN VON BEHÄLTERN**
METHOD AND DEVICE FOR TREATING CONTAINERS
DISPOSITIF ET PROCÉDÉ DE MANUTENTION DE RÉCIPIENTS

(30) Priorität: 28.08.2020 DE 102020122569
(43) Veröffentlichungstag der Anmeldung: 02.03.2022
(73) Patentinhaber: Leibinger GmbH, 79331 Teningen (DE)
(72) Erfinder: Budde, Stefan, 79346 Endingen (DE); Leibinger, Benedikt, 79104 Freiburg im Breisgau (DE)
(74) Vertreter: RACKETTE Patentanwälte PartG mbB

(56) Entgegenhaltungen:
- DE-B- 1 035 566
- DE-C1- 10 111 378
- JP-U- S5 290 886

## Beschreibung

Die Erfindung betrifft eine Vorrichtung zum Behandeln von Behältern gemäß dem Oberbegriff des Anspruchs 1.

Die Erfindung betrifft weiterhin ein Verfahren zum Behandeln von Behältern.

Eine derartige Vorrichtung und ein derartiges Verfahren zum Behandeln von Behältern sind aus US 7,162,848 B2 bekannt. Die vorbekannte Vorrichtung verfügt über und das vorbekannte Verfahren nutzt eine Anzahl von voneinander beabstandet angeordneten Behandlungsstationen, an denen Behälter behandelbar sind, und eine Anzahl von Halteeinheiten für die zu behandelnden Behälter und ist mit einer Anzahl von endlos ausgeführten Transportelementen ausgestattet. Gruppen von zur gleichartigen Behandlung in einer Prozesslinie vorgesehene Halteeinheiten sind jeweils einem Transportelement zugeordnet und für einen Transport von einer Behandlungsstation zu einer weiteren Behandlungsstation taktweise in einer Transportrichtung bewegbar. Weiterhin ist eine Antriebsanordnung vorgesehen, mit der die Transportelemente in der Transportrichtung intermittierend mit verschiedenen Geschwindigkeiten bewegbar sind. Dabei sind die Transportelemente endlos ausgebildet und laufen um jeweils ein Paar Rollen um. Die Halteeinheiten sind dazu eingerichtet, in ihnen angeordnete Behälter an einer Oberseite sowie an einer Unterseite der Vorrichtung gegen die Wirkung der Schwerkraft zu halten. Dadurch lassen sich die Gruppen von Halteeinheiten jeweils Behandlungen mit unterschiedlichen Behandlungsdauern unterziehen.

DE 101 11 378 C1 offenbart eine Vorrichtung zum Transport von plattenartig ausgebildeten Werkstückträgern, auf die Werkstücke lose auflegbar sind. Diese vorbekannte Vorrichtung verfügt über verschieden schnell laufende Riemenantriebe, die in Schnittbereichen überlappen, wobei die Werkstückträger im Stillstand zwischen Riemenantrieben umkuppelbar sind. Dadurch können unterschiedliche Zahlen von Werkstückträgern in einer Ebene über unterschiedliche Wege transportiert werden. Diese vorbekannte Vorrichtung offenbart alle Merkmale des Oberbegriffs des Anspruchs 1.

JP S52 90886 U offenbart eine Vorrichtung mit zwei linear angeordneten und mit verschiedenen Geschwindigkeiten laufenden Transportelementen, mit denen plattenartige Werkstückträger wahlweise koppelbar sind. Dadurch lassen sich die Werkstückträger mit unterschiedlichen Geschwindigkeiten in einer Ebene bewegen.

DE 10 35 566 B offenbart ein Fördersystem mit einer Mehrzahl endloser Ketten für auf ihnen aufliegende Tragplatten, wobei die Ketten mit verschiedenen Geschwindigkeiten antreibbar und die Tragplatten wahlweise an eine der Ketten ankoppelbar sind. An Anhaltevorrichtungen lassen sich die Tragplatten von der Kette entkoppeln, mit der sie ursprünglich verbunden waren, und auf eine andere Kette aufschalten.

Aus DE 10 2015 225 834 A1 ist ein Transportsystem für eine Anlage wie beispielsweise eine Abfüllanlage bekannt, bei der in einem Linearsystem eine erste Antriebsvorrichtung für einen ersten Abschnitt und eine zweite Antriebsvorrichtung für einen zweiten Abschnitt einer Förderstrecke zum Transport von mit Behältern bestückten Halteeinheiten vorhanden sind. Die Antriebsvorrichtungen werden mit einer gleichen, zentral festlegbaren durchschnittlichen Fördergeschwindigkeit betrieben, wobei die für die beiden Abschnitte vorgesehenen spezifischen Fördergeschwindigkeiten unterschiedlich sein können. Die Halteeinheiten sind dabei entweder mit dem ersten Abschnitt oder mit dem zweiten Abschnitt der Antriebsvorrichtung verbunden oder bewegen sich in einem als zum Ausgleich der unterschiedlichen Fördergeschwindigkeiten als Pufferabschnitt vorgesehenen Übergangsbereich zwischen dem ersten Abschnitt unter dem zweiten Abschnitt durch nachfolgende Halteeinheiten passiv getrieben.

Aus US 2015/0175281 A1 ist eine modular aufgebaute Abfüllvorrichtung bekannt, die über eine Förderschiene verfügt, auf der in einer Reihe angeordnete Transportbehälter mit verschiedenen Geschwindigkeiten bewegbar sind.

Der Erfindung liegt die Aufgabe zugrunde, eine Vorrichtung zum Behandeln von Behältern der eingangs genannten Art anzugeben, die sich bei einer verhältnismäßig kompakten Bauform durch eine hohe Flexibilität beim optimierten Anpassen an verschieden lange Behandlungsdauern beim Behandeln von Behältern an Behandlungsstationen auszeichnet.

Der Erfindung liegt weiterhin die Aufgabe zugrunde, ein Verfahren zum Behandeln von Behältern anzugeben, das sich durch eine hohe Flexibilität beim optimierten Anpassen an verschieden lange Behandlungsdauern beim Behandeln von Behältern an Behandlungsstationen auszeichnet.

Die erstgenannte Aufgabe wird bei einer Vorrichtung zum Behandeln von Behältern der eingangs genannten Art erfindungsgemäß mit den kennzeichnenden Merkmalen des Anspruchs 1 gelöst.

Die zweitgenannte Aufgabe wird bei einem Verfahren zum Behandeln von Behältern erfindungsgemäß mit den Merkmalen des Anspruchs 13 gelöst.

Dadurch, dass bei der Vorrichtung gemäß der Erfindung schaltbare Verbindungsanordnungen zum wahlweisen Verbinden der Halteeinheiten mit verschiedenen Transportelementen im Stillstand der Transportelemente vorhanden sind, die sich während einer Zykluszeitdauer intermittierend über spezifische und wenigstens teilweise unterschiedliche Transportwege oder zeitlich betrachtet in unterschiedlichen spezifischen Behandlungstakten, mit angepasster Anzahl an zurückgelegten spezifischen Transportwegen und/oder mit verschiedenen Geschwindigkeiten bewegen, lassen sich die Halteeinheiten zwischen unterschiedlich beabstandeten Behandlungsstationen, die zudem mit verschiedenen Anzahlen an aktiven Behandlungselementen bestückt sind, mit verschiedenen Behandlungsdauern durch wahlweises Verbinden mit sich über taktweise unterschiedliche spezifische Transportwege sowie gegebenenfalls auch mit verschiedenen Geschwindigkeiten zum Kompensieren von verschiedenen Abständen zwischen Behandlungsstationen bewegenden Transportelementen mit bestimmten Anzahlen an spezifischen Transportschritten bewegen.

Dadurch lässt sich beispielsweise der Aufbau von Behandlungsstationen dahingehend optimieren, dass Behandlungsstationen mit einer verhältnismäßig kurzen Behandlungsdauer einfach bestückt aufgebaut sind und mit einem jeweils verhältnismäßig kurzen Transportweg in einem Mehrfachtakt befahren werden, während Behandlungsstationen mit einer verhältnismäßig langen, beispielsweise gegenüber einer kurzen Behandlungsdauer doppelten, Behandlungsdauer mehrfach, beispielsweise doppelt, bestückt sind und mit einem längeren, beispielsweise doppelten, Transportweg in einem Einfachtakt befahren werden.

So können beim Durchführen des Verfahrens gemäß der Erfindung beispielsweise Halteeinheiten länger an Behandlungsstationen verweilen, die eine verhältnismäßig lange Behandlungsdauer erfordern, und dann über einen verhältnismäßig großen spezifischen Transportweg transportiert werden, um eine gleichbleibende Zykluszeitdauer zu wahren.

Im Hinblick auf eine sehr hohe Flexibilität beim räumlichen Anordnen von Behandlungsstationen beispielsweise verhältnismäßig eng beabstandet an einer Oberseite und verhältnismäßig weit beabstandet an einer Unterseite mit jeweils unterschiedlichen Behandlungsdauern ist es besonders vorteilhaft, dass wenigstens ein Transportelement dazu eingerichtet ist, sich über verschiedene spezifische Transportwege und mit verschiedenen Geschwindigkeiten zu bewegen.

Weitere zweckmäßige Ausgestaltungen von Vorrichtungen und Verfahren gemäß der Erfindung sind Gegenstand der abhängigen Ansprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung.

Es zeigen:
- Fig. 1: in einer perspektivischen Ansicht ein Ausführungsbeispiel einer Vorrichtung gemäß der Erfindung mit drei Antriebseinheiten zum Bewegen von drei Paaren von Transportelementen mit auch voneinander verschiedenen wählbaren spezifischen Transportwegen und Geschwindigkeiten zwischen drei beispielhaft dargestellten Behandlungsstationen,
- Fig. 2: in einer Draufsicht das Ausführungsbeispiel gemäß Fig. 1,
- Fig. 3: in einer Seitenansicht das Ausführungsbeispiel gemäß Fig. 1,
- Fig. 4: in einer Schnittansicht das Ausführungsbeispiel gemäß Fig. 1,
- Fig. 5: in einer Ansicht einen Steuernutschieber einer Verbindungsanordnung bei dem Ausführungsbeispiel gemäß Fig. 1 bis Fig. 4 in einer ersten Stellung,
- Fig. 6: in einer Ansicht den Steuernutschieber gemäß Fig. 5 in einer zweiten Stellung,
- Fig. 7: in einer Ansicht den Steuernutschieber gemäß Fig. 5 in einer dritten Stellung,
- Fig. 8: in einer Seitenansicht das Ausführungsbeispiel gemäß Fig. 1 bis Fig. 5 beim Behandeln von Behältern zu einem ersten Behandlungszeitpunkt,
- Fig. 9: in einer Seitenansicht das Ausführungsbeispiel gemäß Fig. 1 bis Fig. 5 beim Behandeln von Behältern zu einem zweiten Behandlungszeitpunkt,
- Fig. 10: in einer Seitenansicht das Ausführungsbeispiel gemäß Fig. 1 bis Fig. 5 beim Behandeln von Behältern zu einem dritten Behandlungszeitpunkt,
- Fig. 11: in einer Seitenansicht das Ausführungsbeispiel gemäß Fig. 1 bis Fig. 5 beim Behandeln von Behältern zu einem vierten Behandlungszeitpunkt,
- Fig. 12: in einer Seitenansicht das Ausführungsbeispiel gemäß Fig. 1 bis Fig. 5 beim Behandeln von Behältern zu einem fünften Behandlungszeitpunkt,
- Fig. 13: in einer Seitenansicht das Ausführungsbeispiel gemäß Fig. 1 bis Fig. 5 beim Behandeln von Behältern zu einem sechsten Behandlungszeitpunkt,
- Fig. 14: in einer perspektivischen Ansicht ein Ausführungsbeispiel einer Vorrichtung gemäß der Erfindung mit zwei Antriebseinheiten zum Bewegen von zwei Paaren von Transportelementen mit auch voneinander verschiedenen wählbaren Transportwegen und Geschwindigkeiten,
- Fig. 15: in einer Draufsicht das Ausführungsbeispiel gemäß Fig. 14,
- Fig. 16: in einer Ansicht mit einem Kipphebel ausgestattete Verbindungsmittel bei dem Ausführungsbeispiel gemäß Fig. 15 mit dem Kipphebel in einer ersten Stellung,
- Fig. 17: in einer Ansicht mit einem Kipphebel ausgestattete Verbindungsmittel bei dem Ausführungsbeispiel gemäß Fig. 15 mit dem Kipphebel in einer zweiten Stellung nach Aktivieren eines Betätigungshubzylinders und
- Fig. 18: in einer Ansicht mit einem Kipphebel ausgestattete Verbindungsmittel bei dem Ausführungsbeispiel gemäß Fig. 15 mit dem Kipphebel in einer zweiten Stellung vor Aktivieren eines weiteren Betätigungshubzylinders.

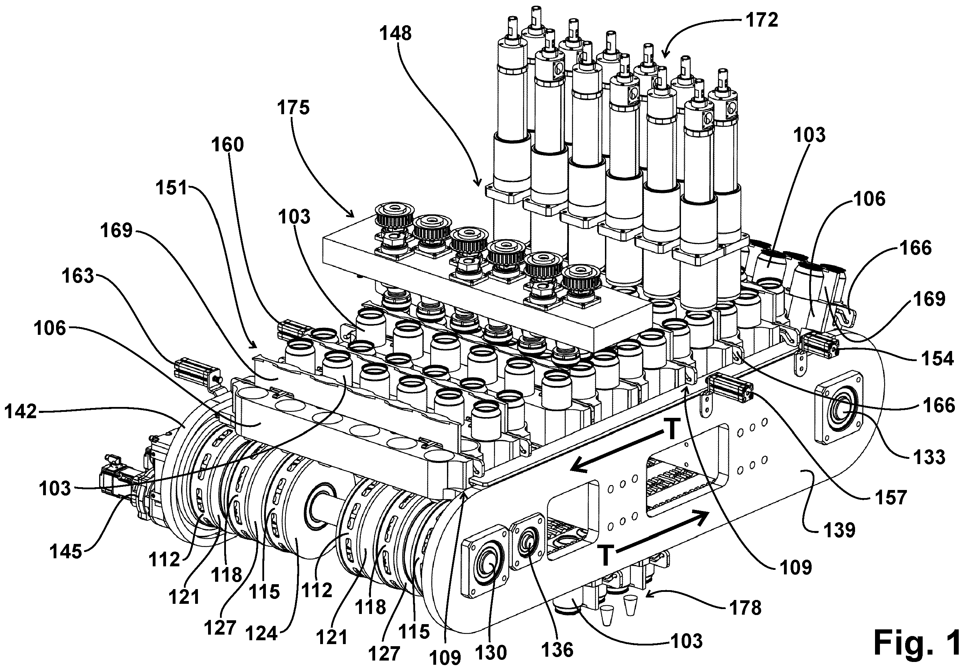

Fig. 1 zeigt in einer perspektivischen Ansicht ein Ausführungsbeispiel einer Vorrichtung gemäß der Erfindung zum Behandeln von Behältern zur Aufnahme von Lebensmitteln, hier in Gestalt von mit einer Flüssigkeit wie einem Getränk zu befüllenden Getränkedosen 103, die in bei diesem Ausführungsbeispiel doppelreihigen Halteeinheiten 106 der Vorrichtung angeordnet sind, in einer parallelisierten Prozesslinie. Die Halteeinheiten 106 sind über schaltbare Verbindungsanordnungen 109 mit verschiedenen Transportelementen, hier in Gestalt von einem ersten Paar von Zahnriemen 112, einem zweiten Paar von Zahnriemen 115 und einem dritten Paar von Zahnriemen 118, wahlweise lösbar verbindbar.

Die Paare von Zahnriemen 112, 115, 118 sind jeweils auf Paaren von zugeordneten Riemenrollen 121, 124, 127 als Rollen, nämlich ersten Paaren von Riemenrollen 121, zweiten Paaren von Riemenrollen 124 und dritten Paaren von Riemenrollen 127, aufgelegt, wobei die Paare von Riemenrollen 121, 124, 127 an einer ersten Antriebswelle 130 und an einer in einer umlaufenden Transportrichtung T in einem Abstand von der ersten Antriebswelle 130 angeordneten zweiten Antriebswelle 133 drehfest beziehungsweise drehbar angebracht sind. Weiterhin verfügt das Ausführungsbeispiel gemäß Fig. 1 über eine dritte Antriebswelle 136, mit der, wie weiter unten näher erläutert, die Riemenrollen 127 der dritten Paare drehfest und antreibbar gekoppelt sind.

Die Antriebswellen 130, 133, 136 sind durch länglich ausgebildete Seitenteile 139, 142 gehalten, die sich mit ihrer Längsrichtung in Transportrichtung T erstrecken. An dem in der Darstellung gemäß Fig. 1 dem Betrachter abgewandten Seitenteil 142 ist für jede Antriebswelle 130, 133, 136 eine einen eigenen Antriebsmotor aufweisende Antriebseinheit 145, 148, 151 einer Antriebsanordnung angebracht, mit der die jeweils gekoppelte Antriebswelle 130, 133, 136 derart mit einem bestimmten wählbaren Drehweg und einer bestimmten wählbaren Drehgeschwindigkeit antreibbar ist, dass sich die Paare von Zahnriemen 112, 115, 118 mit jeweils verschiedenen spezifischen Transportwegen und wählbaren Geschwindigkeiten bewegen.

Zum Schalten der Verbindungsanordnungen 109 sind bei dem Ausführungsbeispiel gemäß Fig. 1 seitlich an einer Oberseite der Seitenteile 139, 142 angebrachte Betätigungsschiebezylinder 154, 157, 160, 163 vorhanden, mit denen, wie weiter unten näher erläutert, ein Steuernutschieber 166 einer Verbindungsanordnung 109 sowie ein mit Formschlusselementen ausgestatteter Niederhalter 169 zum formschlüssigen Fixieren der Getränkedosen 103 in der betreffenden Halteeinheit 106 in einer Richtung quer zu der Transportrichtung T bewegbar ist.

Weiterhin sind der Darstellung gemäß Fig. 1 als zumindest teilweise unterschiedlich voneinander beabstandeten und zumindest teilweise verschiedene Behandlungsdauern in Anspruch nehmenden Behandlungsstationen beispielhaft eine Fülleinheit 172 zum Befüllen der Getränkedosen 103, eine Verschließeinheit 175 zum Verschließen der Getränkedosen 103 nach dem Befüllen sowie eine Spüleinheit 178 zum Spülen der Getränkedosen 103 vor einem Befüllen dargestellt. Die Fülleinheit 172 und die Verschließeinheit 175 sind auf der Oberseite als einer Behandlungsseite der Anordnung gemäß Fig. 1 angeordnet, während die Spüleinheit 178 der Fülleinheit 172 und der Verschließeinheit 175 gegenüberliegend auf der Unterseite als einer weiteren Behandlungsseite der Anordnung gemäß Fig. 1 angeordnet ist.

Bei einer nicht dargestellten Ausführungsform ist wenigstens eine Behandlungseinheit auch an wenigstens einem Übergangsbereich zwischen der Oberseite und der Unterseite angeordnet.

Bei einer zweckmäßigen Ausgestaltung der Erfindung ist dabei vorgesehen, dass ein Transportelement 112, 115, 118 mit wenigstens zwei voneinander verschiedenen Geschwindigkeiten bewegbar ist, wobei die Geschwindigkeiten an Abstände zwischen Behandlungsstationen 172, 175, 178 angepasst sind.

Weiterhin ist die Antriebsanordnung mit den Antriebseinheiten 145, 148, 151 für eine verhältnismäßig einfache Ansteuerung zweckmäßigerweise dazu eingerichtet, dass das Bewegen von Halteeinheiten 106 mit den Transportelementen 112, 115, 118 zwischen in Transportrichtung T aufeinanderfolgenden Behandlungsstationen 172, 175, 178 über einen Basistransportweg oder über ein ganzzahliges Vielfaches des Basistransportwegs erfolgt.

Für eine verhältnismäßig hohe Flexibilität beim Anpassen der Vorrichtung gemäß der Erfindung ist vorgesehen, dass mit wenigstens einer Antriebseinheit 145, 148, 151 wenigstens zwei Transportelemente 112, 115, 118 mit einer gleichen Geschwindigkeit bewegbar sind.

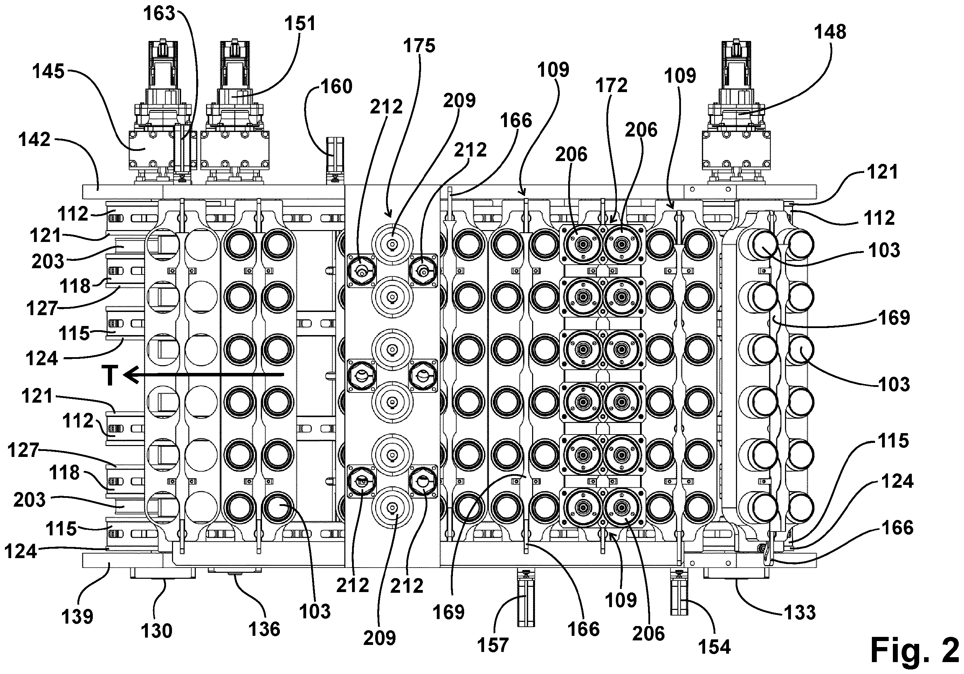

Fig. 2 zeigt das Ausführungsbeispiel gemäß Fig. 1 in einer Draufsicht auf die Fülleinheit 172 und auf die Verschließeinheit 175. In der Darstellung gemäß Fig. 2 sind nunmehr alle drei Antriebseinheiten 145, 148, 151 erkennbar, wobei aus Fig. 2 auch ersichtlich ist, dass die Riemenrollen 127 der dritten Paare mit jeweils einem Antriebsriemen 203 gekoppelt ist, der über die dritte Antriebswelle 136 mit der dritten Antriebseinheit 151 antreibbar ist. Weiterhin lässt sich der Darstellung gemäß Fig. 2 entnehmen, dass die Fülleinheit 172 über eine Anzahl von Füllzylindern 206 verfügt, die in zwei Reihen quer zu der Transportrichtung T angeordnet sind, so dass die Reihen von Füllzylindern 206 parallel zu den Halteeinheiten 106 ausgerichtet sind. Dabei sind die Füllzylinder 206 so positioniert, dass bei Anordnen einen Halteeinheit 106 unterhalb der Fülleinheit 172 jeder Füllzylinder 206 oberhalb einer Getränkedose 103 angeordnet ist.

Weiterhin lässt sich der Darstellung gemäß Fig. 2 entnehmen, dass die Verschließeinheit 175 in Transportrichtung T in einem Abstand nach der Fülleinheit 172 angeordnet ist und über eine Anzahl von Drehmodulen 209 verfügt, die in einer Reihe quer zu der Transportrichtung T angeordnet sind. Jeweils zwei Drehmodule 209 wirken mit paarweise zwischenliegend angeordneten Gegenrollen 212 zusammen, um die Getränkedosen 103 nach dem Befüllen durch Bördeln zu verschließen. Wie weiter unten näher erläutert, erfolgt das Verschließen während eines verhältnismäßig lange andauernden Füllvorganges von zwei Reihen von Getränkedosen 103 in zwei Schritten von jeweils einer Reihe von Getränkedosen 103 mit einem Bewegen von Halteeinheiten 106 mit bereits gefüllten Getränkedosen 103 zum Durchführen des verhältnismäßig kurz andauernden Verschließvorganges.

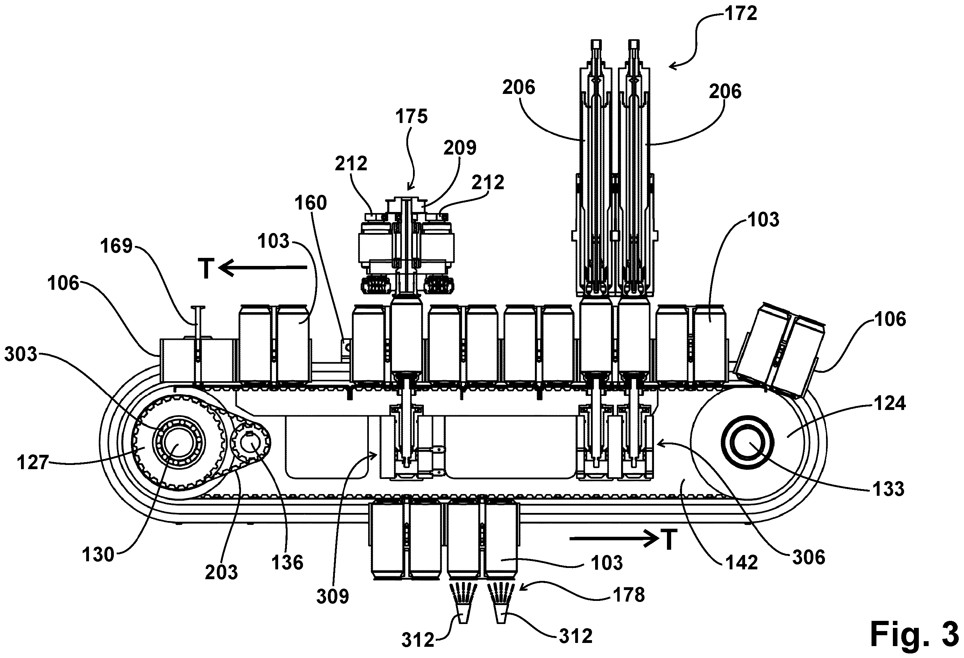

Fig. 3 zeigt in einer Seitenansicht das Ausführungsbeispiel gemäß Fig. 3 mit abgenommenem, in der Darstellung gemäß Fig. 1 dem Betrachter zugewandten Seitenteil 139. Aus Fig. 3 ist zum einen die Drehkopplung einer Riemenrolle 127 des dritten Paares über einen Antriebsriemen 203 mit der durch eine Antriebseinheit 151 zur Drehung antreibbaren dritten Antriebswelle 136 erkennbar, wobei diese Riemenrolle 127 über Kugellager 303 frei drehbar an der ersten Antriebswelle 130 angebracht ist.

Weiterhin lässt sich der Darstellung gemäß Fig. 3 entnehmen, dass die Getränkedosen 103 zum Befüllen an der Fülleinheit 172 und zum Verschließen an der Verschließeinheit 175 über eine doppelreihige Aushebeeinheit 306 beziehungsweise über eine einreihige Aushebeeinheit 309, die zwischen den Zahnriemen 112, 115, 118 liegend angeordnet sind, aus den Halteeinheiten 106 aushebbar sind.

Weiterhin lässt sich der Darstellung gemäß Fig. 3 entnehmen, dass die Spüleinheit 178 über zwei Reihen von Sprühköpfen 312 verfügt, mit denen die jeweils in einer Halteeinheit 106 angeordneten sowie durch jeweils einen Niederhalter 169 formschlüssig gegen Herausfallen gesicherten Getränkedosen 103 zum Reinigen an der Fülleinheit 172 über einen verhältnismäßig langen Zeitraum gründlich spülbar sind.

Aus der Darstellung gemäß Fig. 3 lässt sich erkennen, dass die Abstände zwischen einer in Transportrichtung T der Verschließeinheit 175 nachgeordneten, in Fig. 3 nicht dargestellten Entnahme- und Bestückungseinheit als weiterer Behandlungsstation zum Entnehmen von fertig behandelten Getränkedosen 103 aus bei diesem Ausführungsbeispiel zwei Halteeinheiten 106 und Bestücken dieser beiden Halteeinheiten 106 mit leeren Getränkedosen 103 einerseits und zwischen der Spüleinheit 178 sowie der in Transportrichtung T nachfolgenden Fülleinheit 172 andererseits verhältnismäßig groß sind, während die Abstände zwischen der Fülleinheit 172, der Verschließeinheit 175 und der Entnahme- und Bestückungseinheit verhältnismäßig kurz sind.

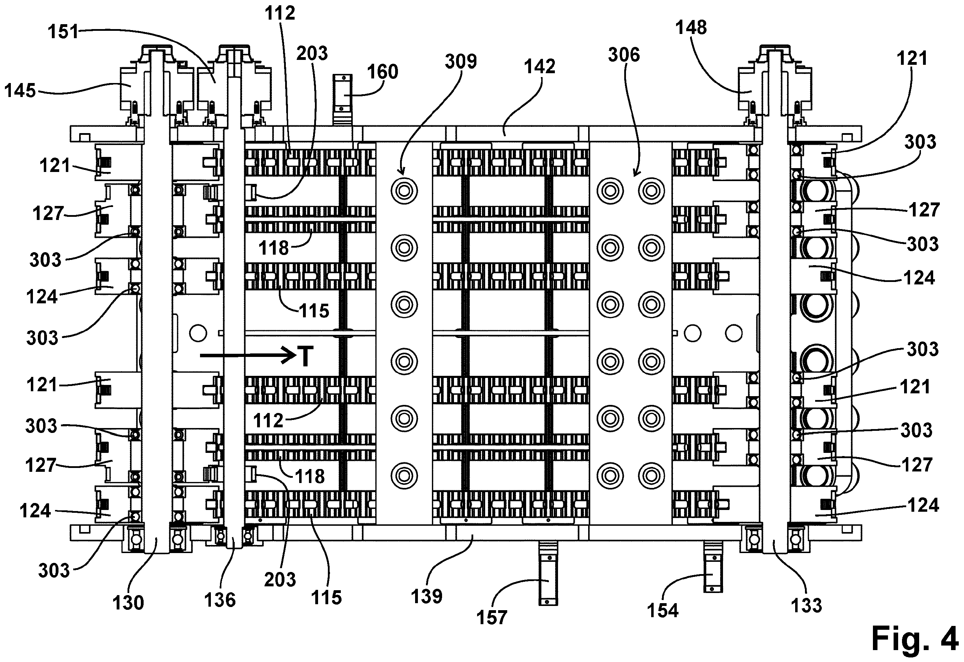

Fig. 4 zeigt in einer Ansicht das Ausführungsbeispiel gemäß Fig. 1 im Schnitt durch die Antriebswellen 130, 133, 136. Aus Fig. 4 ist zu erkennen, dass von den ersten Paaren von Riemenrollen 121 zwei Riemenrollen 121 drehfest mit der ersten Antriebswelle 130 verbunden ist, während die weiteren Paare von Riemenrollen 124, 127 über Kugellager 303 gegenüber der ersten Antriebswelle 130 frei drehbar an der ersten Antriebswelle 130 angebracht sind. Entsprechend sind von dem zweiten Paar von Riemenrollen 124 zwei Riemenrollen 124 drehfest mit der zweiten Antriebswelle 133 gekoppelt, während die anderen mit der zweiten Antriebswelle 133 gekoppelten Paare von Riemenrollen 121, 127 über Kugellager 303 gegenüber der zweiten Antriebswelle 133 frei drehbar an der Antriebswelle 133 angebracht sind. Von den dritten Paaren von Riemenrollen 127 sind zwei Riemenrollen 127 über die Antriebsriemen 203 drehfest mit der dritten Antriebswelle 136 verbunden sowie drehbar an der ersten Antriebswelle 130 und drehbar an der zweiten Antriebswelle 133 gelagert.

Somit ist erkennbar, dass Paare von Zahnriemen 112, 115, 118 jeweils von einer mit ihnen drehfest gekoppelten Antriebswelle 130, 133, 136 mit einer durch die mit der betreffenden Antriebswelle 130, 133, 136 gekoppelten Antriebseinheit 145, 148, 151 mit bestimmten wählbaren spezifischen Transportwegen und Geschwindigkeiten bewegbar sind, wobei die spezifischen Transportwege in Abhängigkeit der Bestückung von sowie Behandlungsdauern an Behandlungsstationen 172, 175, 178 und Geschwindigkeiten aufgrund der unterschiedlichen Abstände zwischen Behandlungsstationen 172, 175, 178 beim Bewegen der Halteeinheiten 106 zwischen Behandlungsstationen 172, 175, 178 voneinander verschieden sind, um eine Behandlung mit einer bestimmten, an allen Behandlungsstationen 172, 175, 178 gleichen Zykluszeitdauer zu gewährleisten.

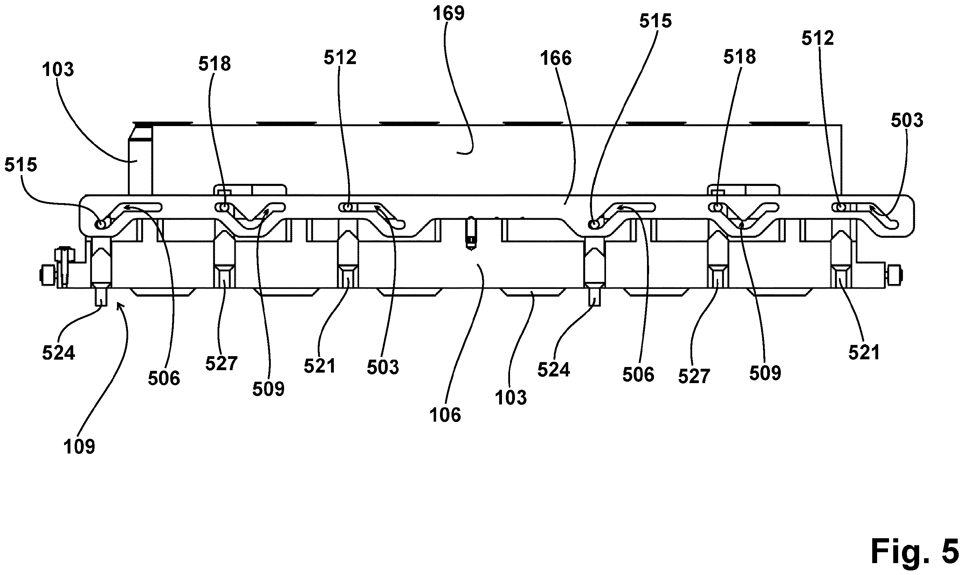

Fig. 5 zeigt in einer Ansicht eine Verbindungsanordnung 109, die, wie bereits oben angegeben, über einen Steuernutschieber 166 verfügt. Der Steuernutschieber 166 ist mit einem ersten Paar von zweistufigen Steuernuten 503, einem zweiten Paar von zweistufigen Steuernuten 506 und einem dritten Paar von dreistufigen Steuernuten 509 ausgestattet. In den Paaren von Steuernuten 503, 506, 509 laufen Steuerstifte 512, 515, 518, die bei einer seitlichen Bewegung des Steuernutschiebers 166 Paare von Eingriffstößel 521, 524, 527 zu einer rechtwinklig zu der Bewegungsrichtung des Steuernutschiebers 166 gerichteten Bewegung antreiben.

In der Darstellung gemäß Fig. 5 befindet sich der Steuernutschieber 166 in einer ersten Endstellung, in der die Paare von Eingriffstößel 524 des zweiten Paares, die mit dem dritten Paar von Zahnriemen 115, die mit der zweiten Antriebswelle 133 bewegbar sind, in Eingriff bringbar sind, während die anderen Paare von Eingriffstößel 521, 527 mit den ihnen zugeordneten Paaren von Zahnriemen 112, 118 eingriffsfrei sind.

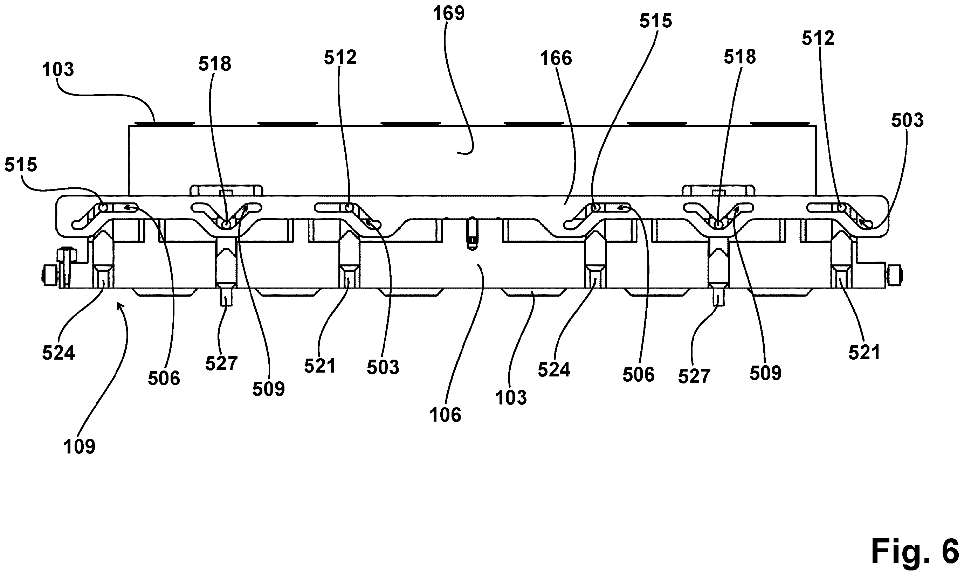

Fig. 6 zeigt die Anordnung gemäß Fig. 5 mit dem Steuernutschieber 166 in einer Mittelstellung, in der das dritte Paar von Eingriffstößel 527 abgesenkt und mit dem dritten Paar von Zahnriemen 118 in Eingriff bringbar sind, die durch die dritte Antriebswelle 136 bewegbar sind, während die anderen Paare von Eingriffstößel 521, 524 mit den ihnen zugeordneten Paaren von Zahnriemen 112, 115 eingriffsfrei sind.

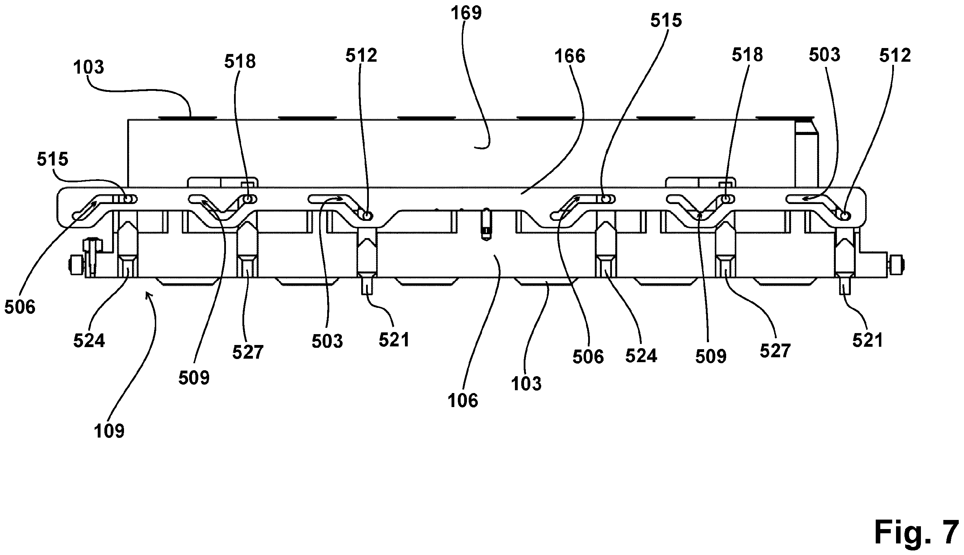

Fig. 7 zeigt die Anordnung gemäß Fig. 5 und Fig. 6 mit dem Steuernutschieber 166 in einer zweiten Endstellung, in der das erste Paar von Eingriffstößel 521 abgesenkt und mit dem ersten Paar von Zahnriemen 112 in Eingriff bringbar sind, die mittels der ersten Antriebswelle 130 bewegbar sind, während die anderen Paare von Eingriffstößel 524, 527 zurückgezogen und mit den ihnen zugeordneten Paaren von Zahnriemen 115, 118 eingriffsfrei sind.

Somit ist erkennbar, dass die Halteeinheiten 106 in Abhängigkeit der Stellung des jeweiligen Steuernutschiebers 166 mit jeweils einem Paar von Zahnriemen 112, 115, 118 verbindbar sowie von diesen wieder lösbar und bei Eingriff entsprechend des jeweils spezifischen Transportwegs und der jeweiligen aktuellen Geschwindigkeit des betreffenden Paares von Zahnriemen 112, 115, 118 bewegbar sind, sofern die zugehörige Antriebswelle 130, 133, 136 in Drehung ist.

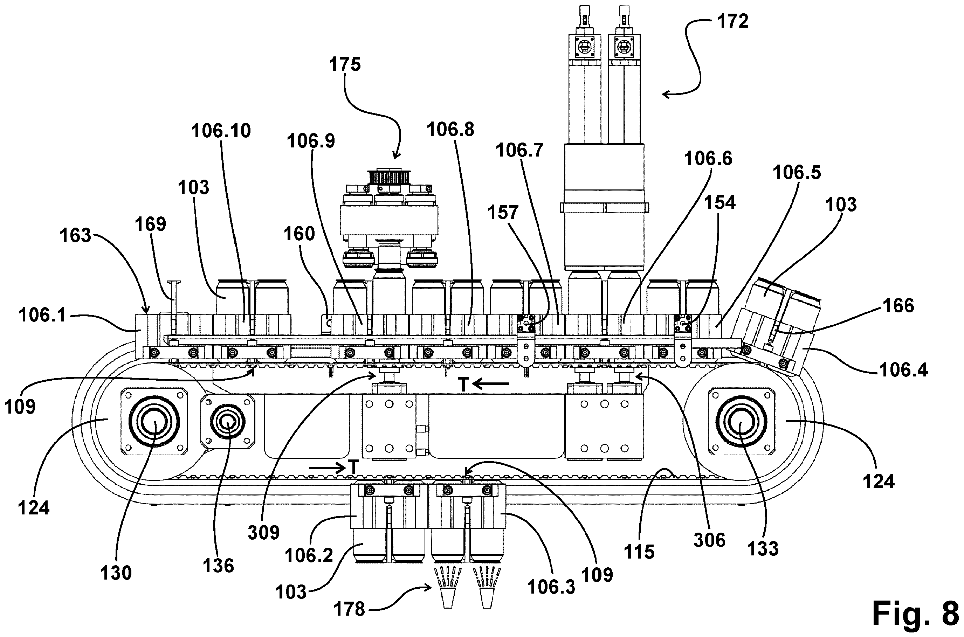

Fig. 8 bis Fig. 13 zeigen in Seitenansichten das vorangehend anhand Fig. 1 bis Fig. 7 erläuterte Ausführungsbeispiel einer Vorrichtung zum Behandeln von Behältern 103 gemäß der Erfindung mit zehn doppelreihigen Halteeinheiten 106, die zu Zwecken der nachfolgenden anschaulichen Erläuterung eines Gesamtbehandlungszyklus während einer Zykluszeitdauer mit Bezugszeichen 106.1 bis 106.10 individuell identifiziert sind, zu verschiedenen Behandlungszeitpunkten.

Im Vorgriff auf die nachfolgenden Ausführungen im Zusammenhang mit Fig. 8 bis Fig. 13 wird zusammenfassend festgehalten, dass die Paare von Zahnriemen 112, 115, 118, die durch die ihnen zugeordneten Antriebswellen 130, 133, 136 mit zugehörigen Antriebseinheiten 145, 148, 151 mit verschiedenen spezifischen Transportwegen und mit bei diesem Ausführungsbeispiel drei jeweils voneinander verschiedenen wählbaren Geschwindigkeiten bewegbar sind und bei Beginn einer Behandlung an einer Behandlungsstation, hier der Fülleinheit 172, der Verschließeinheit 175, der Spüleinheit 178 sowie der Entnahme- und Bestückungseinheit, still stehen, so dass die Verbindungsanordnungen 109 der entsprechenden Halteeinheiten 106 von den betreffenden Zahnriemen 112, 115, 118 problemfrei lösbar und direkt oder bei einer nicht dargestellten Ausführungsform nach Abschluss einer Behandlung dann wahlweise wieder mit den jeweiligen Zahnriemen 112, 115, 118 verbindbar, die die zum Erreichen der nächsten Behandlungsstation erforderliche Geschwindigkeit und den jeweiligen Transportweg bereitstellen.

Fig. 8 zeigt in einer Seitenansicht die Anordnung von Halteeinheiten 106.1 bis 106.10 zu einem ersten Behandlungszeitpunkt, der kurz nach Beginn eines Gesamtbehandlungszyklus mit einer bestimmten gleichbleibenden gesamten Behandlungsdauer liegt. In der Anordnung gemäß Fig. 8 steht die erste Halteeinheit 106.1 vor einem Bestücken mit Getränkedosen 103 an der auch in Fig. 8 nicht dargestellten Entnahme- und Bestückungseinheit. Die zweite Halteeinheit 106.2 befindet sich mit Getränkedosen 103 bestückt in Transportrichtung T unmittelbar vor der Spüleinheit 178 angeordnet ist, während die sich in der Transportrichtung T unmittelbar vor der zweiten Halteeinheit 106.2 angeordnete dritte Halteeinheit 106.3 an der Spüleinheit 178 angeordnet ist. Bei dem ersten Behandlungszeitpunkt hat das Spülen der durch die dritte Halteeinheit 106.3 formschlüssig gehaltenen Getränkedosen 103 gerade begonnen.

Die vierte Halteeinheit 106.4 befindet sich in Transportrichtung T in einem verhältnismäßig großen Abstand zu der dritten Halteeinheit 106.3 kurz vor Einlaufen auf die Oberseite und hält die zuvor an der Spüleinheit 178 gespülten Getränkedosen 103. Die in Transportrichtung T unmittelbar nach der vierten Halteeinheit 106.4 angeordnete fünfte Halteeinheit 106.5 ist vollständig auf die Oberseite eingelaufen und unmittelbar vor der Fülleinheit 172 angeordnet.

Die in Transportrichtung T der fünften Halteeinheit 106.5 nachfolgende sechste Halteeinheit 106.6 ist zum ersten Behandlungszeitpunkt unterhalb der Fülleinheit 172 angeordnet, wobei die in der sechsten Halteeinheit 106.6 angeordneten Getränkedosen 103 nach Betätigen des Betätigungsschiebezylinders 154 zu einem vorangegangenen Behandlungszeitpunkt der Formschluss zwischen den Getränkedosen 103 sowie dem Niederhalter 169 aufgehoben und die Getränkedosen 103 durch die doppelreihige Aushebeeinheit 306 ausgehoben worden sind, so dass alle von der sechsten Halteeinheit 106.6 aufgenommenen Getränkedosen 103 mit der Fülleinheit 172 über eine verhältnismäßig lange Behandlungsdauer mit einem Getränk als Beispiel für ein Medium befüllbar sind.

Die in Transportrichtung T der sechsten Halteeinheit 106.6 nachgeordnete siebte Halteeinheit 106.7 befindet sich zwischen der Fülleinheit 172 und der Verschließeinheit 175 in Warteposition für ein späteres Verschließen der durch sie aufgenommenen Getränkedosen 103 unmittelbar vor der in Transportrichtung T nachfolgenden achten Halteeinheit 106.8, die sich ebenfalls noch vor der Behandlung durch die Verschließeinheit 175 zum Verschließen der durch sie aufgenommenen Getränkedosen 103 befindet.

Die in Transportrichtung T der achten Halteeinheit 106.8 nachgeordnete neunte Halteeinheit 106.9 befindet sich mit der in Transportrichtung T rückseitigen Reihe von durch sie aufgenommenen Getränkedosen 106 unterhalb des Wirkbereichs der Verschließeinheit 175 mit einer Reihe von durch die einreihige Aushebeeinheit 309 ausgehobenen Getränkedosen 103, während die in Transportrichtung T vorderseitige Reihe von durch die neunte Halteeinheit 106.9 aufgenommenen Getränkedosen 103 bereits fertig verschlossen ist.

Die zehnte Halteeinheit 106.10 schließlich befindet sich in Transportrichtung T mit einem Abstand zu der neunten Halteeinheit 106.9 unmittelbar vor der ersten Halteeinheit 106.1, wobei alle durch die zehnte Halteeinheit 106.10 aufgenommenen Getränkedosen 103 verschlossen und damit für die nachfolgende Entnahme- und Bestückungseinheit zum Entnehmen abschließend behandelt sind.

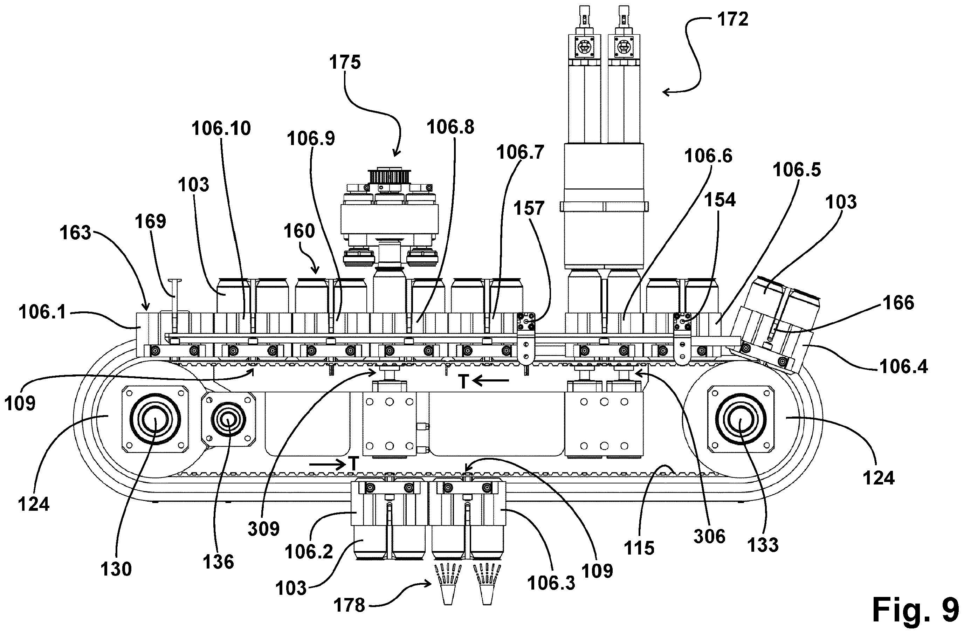

Fig. 9 zeigt in einer Seitenansicht das anhand Fig. 1 bis Fig. 7 erläuterte Ausführungsbeispiel zu einem dem anhand Fig. 8 erläuterten ersten Behandlungszeitpunkt nachfolgenden zweiten Behandlungszeitpunkt. Zwischen dem ersten Behandlungszeitpunkt gemäß Fig. 8 und dem zweiten Behandlungszeitpunkt gemäß Fig. 9 wurden die siebte Halteeinheit 106.7, die achte Halteeinheit 106.8 und die neunte Halteeinheit 106.9 mit einer mittleren Geschwindigkeit mittels des Zahnriemens 115 in Transportrichtung T um einen ersten, verhältnismäßig kurzen Transportweg bewegt, nachdem mit dem Betätigungsschiebezylinder 157 die jeweiligen Verbindungsanordnungen 109 auf die Paare von Zahnriemen 115 mit der mittleren Geschwindigkeit mit der Stellung des Steuernutschiebers 166 in der Anordnung gemäß Fig. 5 eingestellt worden sind. Die mittlere Geschwindigkeit ist dabei so gewählt, dass die gefüllten, aber noch offenen Getränkedosen 103 nicht überschwappen.

Bei dem in Fig. 9 dargestellten zweiten Behandlungszeitpunkt befindet sich nach dem Zurücklegen eines weiteren spezifischen, für die Verschließeinheit 175 in einem Taktschritt zurückgelegten relativ kurzen Transportwegs nunmehr die durch die achte Halteeinheit 106.8 aufgenommene, in Transportrichtung T vorderseitige Reihe von Getränkedosen 103 zum Verschließen an der Verschließeinheit 175, während das Befüllen der durch die sechste Halteeinheit 106.6 aufgenommenen Getränkedosen 103 an der Füllstation 172 und das Spülen der durch die dritte Halteeinheit 106.3 gehaltenen Getränkedosen 103 fortgesetzt wird.

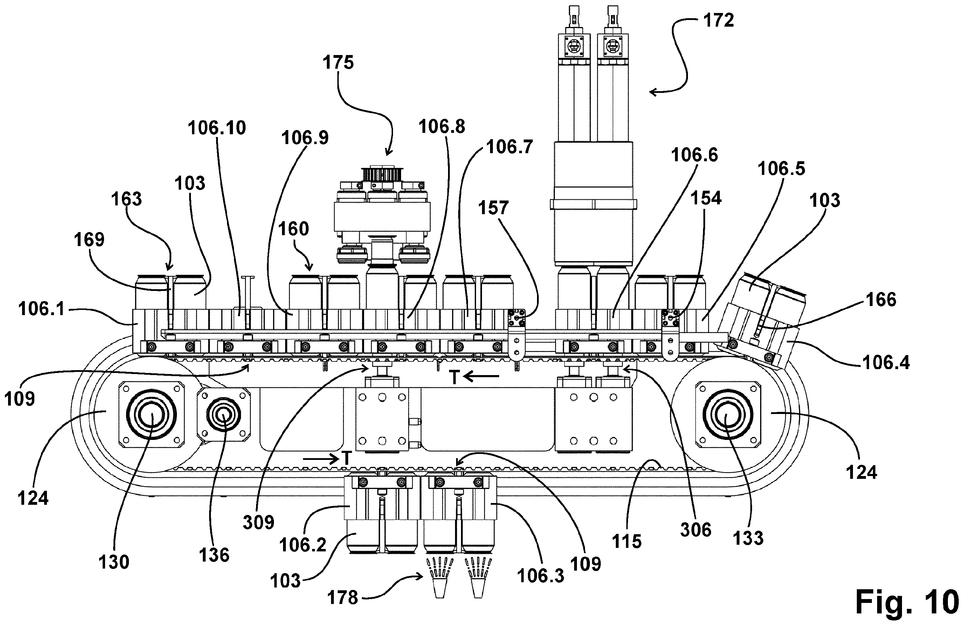

Fig. 10 zeigt in einer Seitenansicht das vorangehend anhand Fig. 1 bis Fig. 7 erläuterte Ausführungsbeispiel zu einem dem zweiten Behandlungszeitpunkt gemäß Fig. 9 nachfolgenden dritten Behandlungszeitpunkt. Zwischen dem zweiten Behandlungszeitpunkt gemäß Fig. 9 und dem dritten Behandlungszeitpunkt gemäß Fig. 10 bleibt die Anordnung aller Halteeinheiten 106.1 bis 106.10 unter Fortführen der jeweiligen Behandlungen an der Fülleinheit 172, der Verschließeinheit 175 und der Spüleinheit 178 unverändert, wobei jedoch die erste Halteeinheit 106.1 an der nicht dargestellten Entnahme- und Bestückungseinheit mit unbehandelten Getränkedosen 103 bestückt ist, während die bereits zu dem zweiten Behandlungszeitpunkt gemäß Fig. 9 fertig behandelten, in der zehnten Halteeinheit 106.10 fertig behandelten Getränkedosen 103 an der Entnahme- und Bestückungseinheit entnommen worden sind.

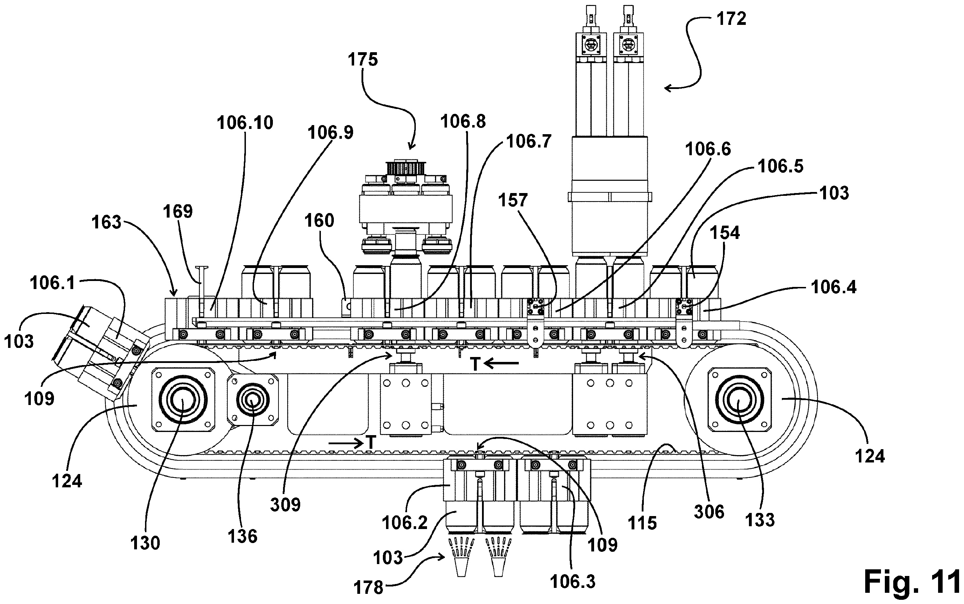

Fig. 11 zeigt in einer Seitenansicht das anhand Fig. 1 bis Fig. 7 erläuterte Ausführungsbeispiel zu einem dem dritten Behandlungszeitpunkt gemäß Fig. 10 nachfolgenden vierten Behandlungszeitpunkt. Zwischen dem dritten Behandlungszeitpunkt gemäß Fig. 10 und dem vierten Behandlungszeitpunkt gemäß Fig. 11 wurden die zweite Halteeinheit 106.2, die dritte Halteeinheit 106.3, die vierte Halteeinheit 106.4, die fünfte Halteeinheit 106.5, die sechste Halteeinheit 106.6, die neunte Halteeinheit 106.9 und die zehnte Halteeinheit 106.10 mit einer ersten mittleren Geschwindigkeit in Transportrichtung T bewegt, während die siebte Halteeinheit 106.7 sowie die achte Halteeinheit 106.8 durch entsprechendes Schalten der Verbindungsanordnungen 109 auf die Paare von Zahnriemen 115 mit einer zweiten, gegenüber der mittleren Geschwindigkeit niedrigeren Geschwindigkeit und die Paare von Zahnriemen 118 mit der mittleren Geschwindigkeit durch Betätigen des Betätigungsschiebezylinders 160 bewegt worden sind. Die erste Halteeinheit 106.1 ist durch den Betätigungsschiebezylinder 163 auf die durch die Zahnriemen 112 bereitgestellte mittlere Geschwindigkeit geschaltet.

In der Anordnung gemäß Fig. 11 befindet sich somit die erste Halteeinheit 106.1 in Transportrichtung T auf dem Weg in Richtung der Spüleinheit 178, während sich die zweite Halteeinheit 106.2 nach einem Zurücklegen eines relativ großen Transportwegs in einem einzigen Taktschritt nunmehr zum Spülen der durch sie gehaltenen Getränkedosen 103 an der Spülstation 178 befindet. Die dritte Halteeinheit 106.3 ist in einem einzigen Taktschritt über einen relativ großen Transportweg mit der mittleren Geschwindigkeit in Transportrichtung T vorgerückt, während sich nunmehr die fünfte Halteeinheit 106.5 nach Zurücklegen eines relativ großen Transportwegs in einem einzigen Taktschritt an der Füllstation 172 befindet und die vierte Halteeinheit 106.4 unmittelbar vor der Fülleinheit 172 angeordnet ist. Die sechste Halteeinheit 106.6 und die siebte Halteeinheit 106.7 wurden mit den durch sie aufgenommenen, gefüllten, aber noch offenen Getränkedosen 103 mit der zweiten niedrigen Geschwindigkeit mit einem spezifischen, relativ großen Transportweg in einem einzigen Taktschritt in Richtung der Verschließstation 175 bewegt, während die in Transportrichtung T rückseitige Reihe von durch die achte Halteeinheit 106.8 aufgenommenen Getränkedosen 103 nach Bewegen über einen spezifischen, relativ kleinen Transportweg in einem weiteren, hier zweiten Taktschritt durch die einreihige Aushebeeinheit 309 ausgehoben sind und sich in der Behandlung durch die Verschließeinheit 175 zum Verschließen der betreffenden Getränkedosen 103 befinden.

Die neunte Halteeinheit 106.9 befindet sich in Transportrichtung T mit fertig behandelten Getränkedosen 103 unmittelbar vor der Entnahme- und Bestückungseinheit, mittels der zu dem vierten Behandlungszeitpunkt gemäß Fig. 11 die zehnte Halteeinheit 106.10 von den fertig behandelten Getränkedosen 103 befreit worden ist.

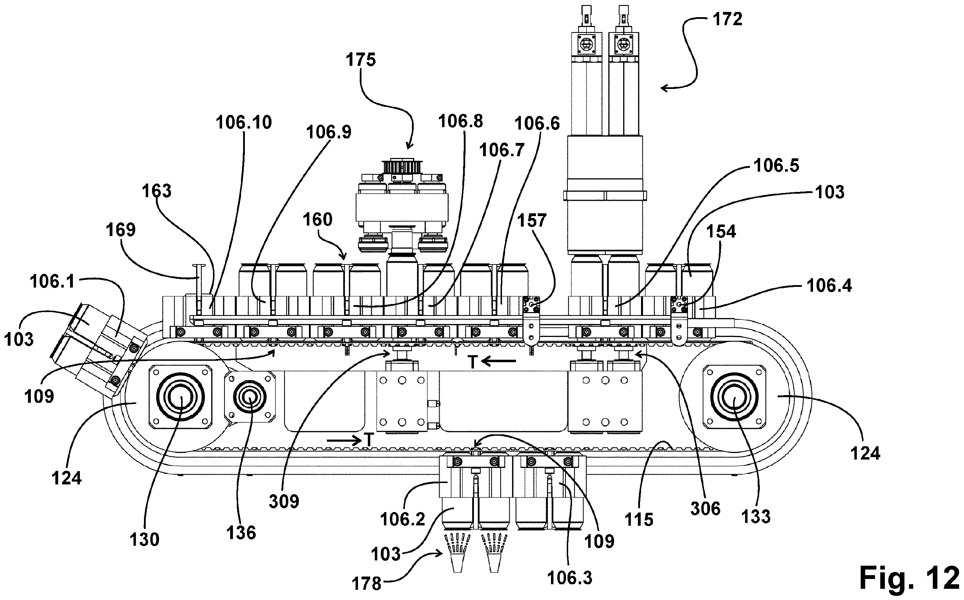

Fig. 12 zeigt in einer Seitenansicht das anhand Fig. 1 bis Fig. 7 erläuterte Ausführungsbeispiel zu einem dem vierten Behandlungszeitpunkt gemäß Fig. 11 nachfolgenden fünften Behandlungszeitpunkt. Zwischen dem vierten Behandlungszeitpunkt gemäß Fig. 11 und dem fünften Behandlungszeitpunkt gemäß Fig. 12 verbleiben die erste Halteeinheit 106.1, die zweite Halteeinheit 106.2, die dritte Halteeinheit 106.3, die vierte Halteeinheit 106.4, die fünfte Halteeinheit 106.5, die neunte Halteeinheit 106.9 und die zehnte Halteeinheit 106.10 aufgrund Stillstands der Zahnriemen 115, 118, mit denen deren Verbindungsanordnungen 109 in Eingriff sind, unter Fortsetzen der entsprechenden Behandlungen durch die Fülleinheit 172 und die Spüleinheit 178 an Ort und Stelle, während die sechste Halteeinheit 106.6, die siebte Halteeinheit 106.7 und die achte Halteeinheit 106.8 mit der mittleren Geschwindigkeit in Transportrichtung T bewegt worden sind, wobei nunmehr nach einem Taktschritt mit einem relativ kurzen Transportweg die in Transportrichtung T vorderseitige Reihe von durch die siebte Halteeinheit 106.7 aufgenommenen Getränkedosen 103 durch die einreihige Aushebeeinheit 309 ausgehoben worden sind und sich in der verschließenden Behandlung durch die Verschließeinheit 175 befinden.

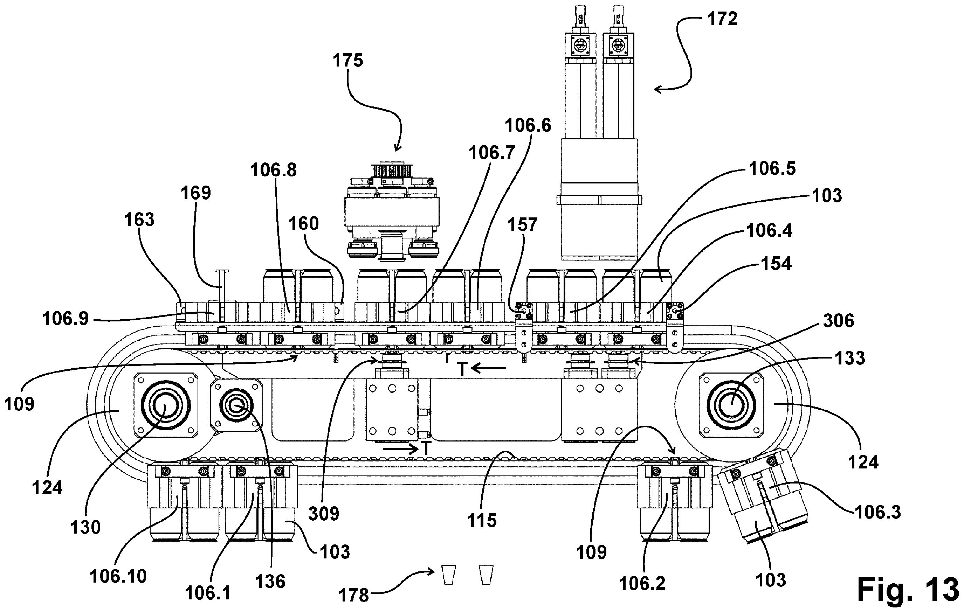

Fig. 13 zeigt in einer Seitenansicht das anhand Fig. 1 bis Fig. 7 erläuterte Ausführungsbeispiel zu einem dem fünften Behandlungszeitpunkt gemäß Fig. 12 nachfolgenden sechsten Behandlungszeitpunkt. Zu dem sechsten Behandlungszeitpunkt gemäß Fig. 13 sind alle Halteeinheiten 106.1 bis 106.10 in Bewegung, wobei sich die sechste Halteeinheit 106.6 sowie die siebte Halteeinheit 106.7 mit der niedrigen Geschwindigkeit, die vierte Halteeinheit 106.4, die fünfte Halteeinheit 106.5, die achte Halteeinheit 108.8 sowie die neunte Halteeinheit 106.9 mit der mittleren Geschwindigkeit und die erste Halteeinheit 106.1, die zweite Halteeinheit 106.2, die dritte Halteeinheit 106.3 sowie die zehnte Halteeinheit 106.10 mit einer dritten, bei dem vorliegenden Ausführungsbeispiel zum Überbrücken der relativ weiten Wege der betreffenden Halteeinheiten 106.1, 106.2, 106.3, 106.10 ausgehend von der Anordnung gemäß Fig. 12 zu der Fülleinheit 172 beziehungsweise zu der Spüleinheit 178 gegenüber der vorgenannten mittleren Geschwindigkeit erheblich höheren Geschwindigkeit bewegen.

Nach einem dem sechsten Behandlungszeitpunkt gemäß Fig. 13 nachfolgenden weiteren Behandlungszeitpunkt ist ein erster Teilabschnitt des Gesamtbehandlungszyklus abgeschlossen, der mit einer Anordnung der Halteeinheiten 106.1 bis 106.10 entsprechend Fig. 8 mit weiteren Teilabschnitten bis zu einem letzten Teilabschnitt fortgesetzt.

Der Gesamtbehandlungszyklus ist abgeschlossen, sobald am Ende des letzten Teilabschnitts mit Ende der Zykluszeitdauer wieder die Anordnung gemäß Fig. 8 kurz vor dem ersten Behandlungszeitpunkt erreicht ist.

Aus den Erläuterungen im Zusammenhang mit Fig. 8 bis Fig. 13 ergibt sich zusammenfassend somit, dass Transportelemente, hier in Gestalt der Paare von Zahnriemen 112, 115, 118, mit jeweils spezifischen Transportwegen, bestimmten Anzahlen an zurückgelegten spezifischen Transportwegen und mit nur einer Geschwindigkeit oder mit mehreren verschiedenen Geschwindigkeiten bewegbar sind.

Es versteht sich, dass die voranstehend angegebenen Verhältnisse der verschiedenen, für die Zahnriemen 112, 115, 118 auch einzeln wählbaren Geschwindigkeiten, mit der die Halteeinheiten 106 bewegbar sind, rein beispielhaft anzusehen und bei anderen Ausgestaltungen mit von dem voranstehend erläuterten Ausführungsbeispiel abweichenden Anzahl von Halteeinheiten 106, Anzahl von Behandlungsstationen sowie deren Behandlungsdauern und zwischen den Behandlungsstationen zurückzulegenden Wegen entsprechend anpassbar sind. Insbesondere sei angemerkt, dass in diesem Zusammenhang durch entsprechende Ausgestaltung der Antriebsanordnung und der Transportelemente mehr als drei Geschwindigkeiten für mehr als drei Sätze von Transportelementen vorgesehen sein können.

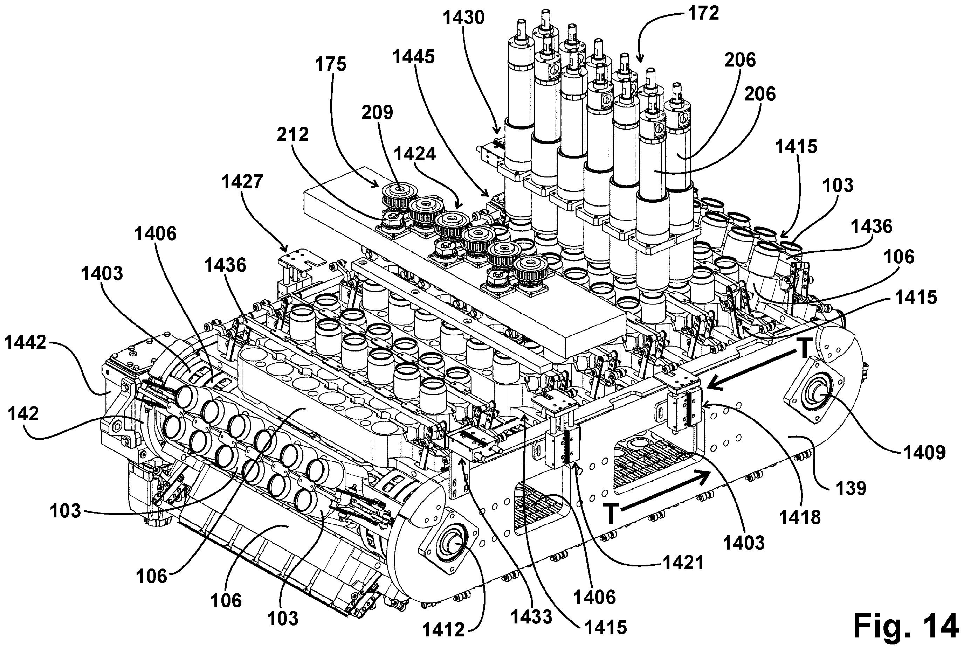

Fig. 14 zeigt in einer perspektivischen Ansicht ein weiteres Ausführungsbeispiel einer Vorrichtung zum Behandeln von Behältern, wobei sich bei dem anhand Fig. 1 bis Fig. 13 erläuterten Ausführungsbeispiel und bei dem Ausführungsbeispiel gemäß Fig. 14 einander entsprechende Komponenten mit den gleichen Bezugszeichen versehen und zum Vermeiden von Wiederholungen zumindest teilweise im Weiteren nicht näher erläutert sind. Das Ausführungsbeispiel gemäß Fig. 14 unterscheidet sich von dem anhand Fig. 1 bis Fig. 13 erläuterten Ausführungsbeispiel im Wesentlichen dadurch, dass ein Paar von außenliegenden Zahnriemen 1403 und ein Paar von innenliegenden Zahnriemen 1406 vorhanden sind, die jeweils auf ein Paar von in Fig. 14 nicht sichtbaren Riemenrollen als Rollen durch eine erste Antriebswelle 1409 beziehungsweise durch eine zweite Antriebswelle 1412 mit voneinander verschiedenen Geschwindigkeiten bewegbar sind. Zweckmäßigerweise entspricht bei diesem Ausführungsbeispiel die höhere Geschwindigkeit dem Doppelten der niedrigeren Geschwindigkeit.

Weiterhin verfügt das Ausführungsbeispiel gemäß Fig. 14 über Verbindungsanordnungen 1415, die über einen weiter unten näher erläuterten Kipphebelmechanismus mittels von unten nach oben beziehungsweise von oben nach unten wirkender Betätigungshubzylindern 1418, 1421, 1424, 1427 betätigbar sind.

Des Weiteren verfügt das Ausführungsbeispiel gemäß Fig. 14 über Niederhalterschiebezylinder 1430, 1433, mit denen eine Niederhalterleiste 1436 mit daran angebrachten Formschlusselementen zwischen einer Freigabestellung und einer Niederhalterstellung hin und her bewegbar ist.

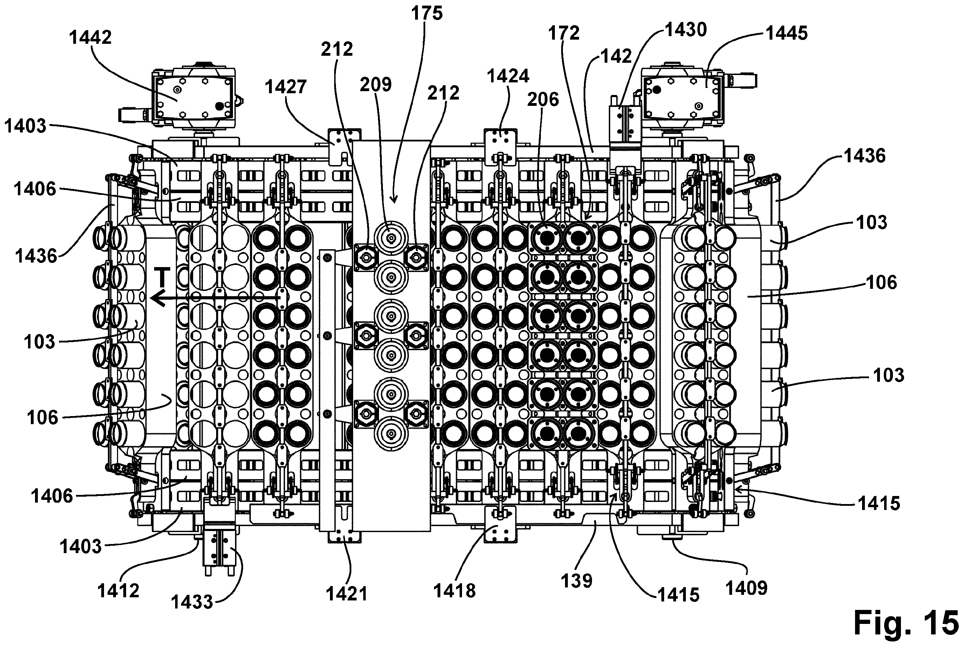

Fig. 15 zeigt in einer Draufsicht das Ausführungsbeispiel gemäß Fig. 14. Aus Fig. 15 ist ersichtlich, dass jede Antriebswelle 1409, 1412 durch eine drehfest mit ihr gekoppelte Antriebseinheit 1442 zur Drehung und damit zum Bewegen der Paare von Zahnriemen 1403, 1406 mit verschiedenen Geschwindigkeiten antreibbar ist.

Bei dem Ausführungsbeispiel gemäß Fig. 14 und Fig. 15 ist durch das Vorsehen einer Bewegung der Halteeinheiten 106 mit zwei voneinander verschiedenen spezifischen Transportwegen ein Ausgleich der Behandlungsdauer an zwei Behandlungsstationen, bei dem Ausführungsbeispiel gemäß Fig. 14 und Fig. 15 der Fülleinheit 172 und der Verschließeinheit 175, geschaffen.

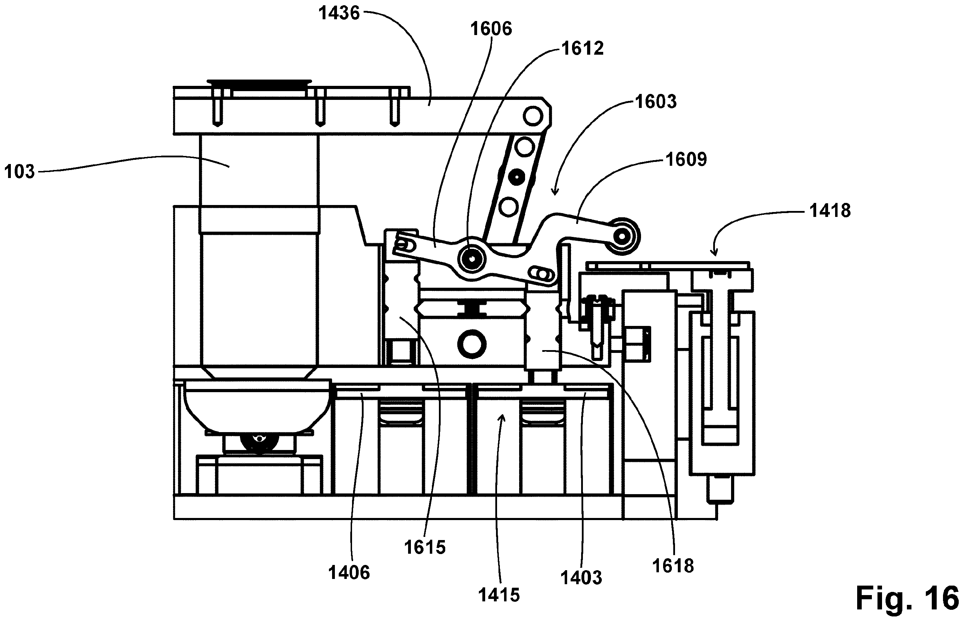

Fig. 16 zeigt in einer detaillierteren Seitenansicht den im Zusammenhang mit Fig. 14 genannten Kipphebelmechanismus. Der Kipphebelmechanismus verfügt über einen Kipphebel 1603, der einstückig aus einem geraden Querstück 1606 und aus einem mit dem Querstück 1606 verbundenen Anlenkstück 1609 aufgebaut ist. Das Querstück 1606 ist in etwa mittig drehbar um eine Kippachse 1612 gelagert, so dass mit den Enden des Querstücks 1606 gekoppelte Eingriffstößel 1615, 1618 wechselweise zwischen einer Eingriffstellung und einer Freigabestellung bewegbar sind. In der Darstellung gemäß Fig. 16 befindet sich das Anlenkstück 1609 in einer abgesenkten Stellung.

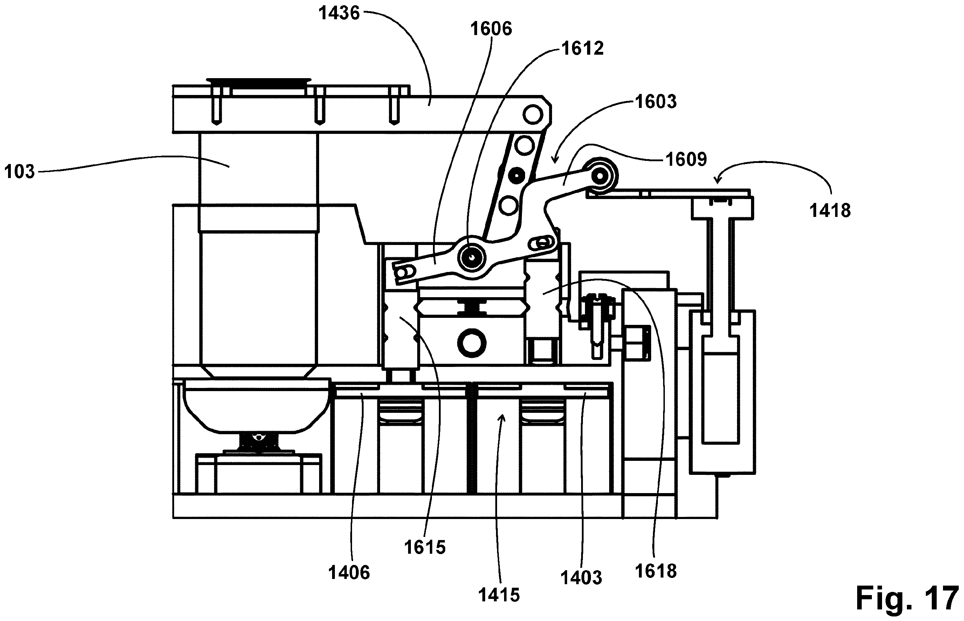

Fig. 17 zeigt in einer Ansicht entsprechend Fig. 16 den Kipphebel 1603 in einer aufgrund Einwirkens eines Betätigungshubzylinders 1418 auf das Anlenkstück 1609 angehobenen Stellung, so dass sich die Stellung der Eingriffstößel 1615, 1618 gemäß Fig. 17 gegenüber der Anordnung der Eingriffstößel 1615, 1618 gemäß Fig. 16 invertiert hat.

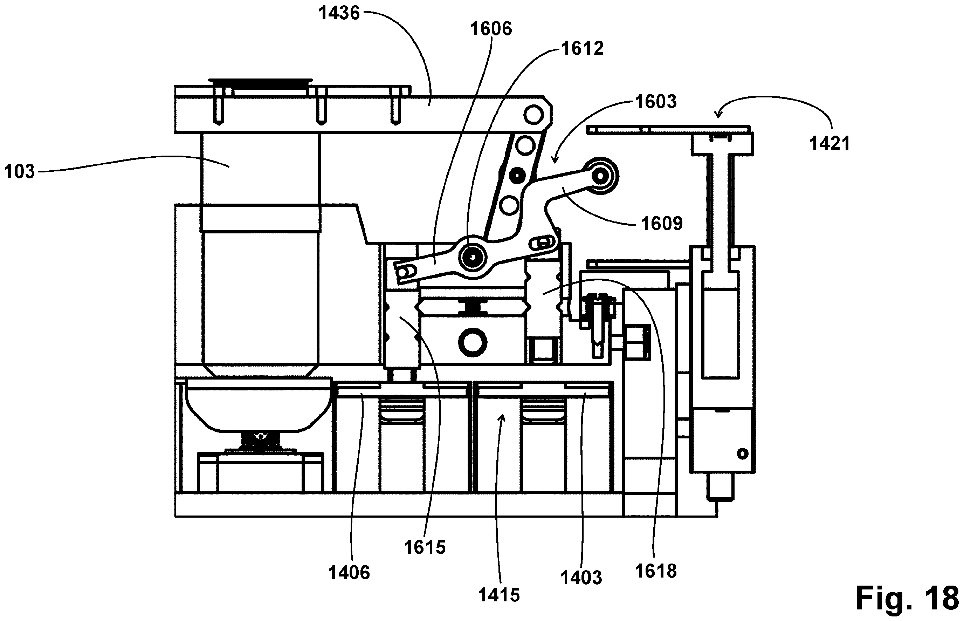

Fig. 18 zeigt die Anordnung gemäß Fig. 17 mit dem Anlenkstück 1609 in der angehobenen Stellung vor Betätigen eines weiteren Betätigungshubzylinders 1421, der nach unten wirkt und bei Absenken den Kipphebel 1603 wieder in die abgesenkte Stellung gemäß Fig. 16 überführt.

Bei einer nicht dargestellten Abwandlung der voranstehend erläuterten Ausführungsbeispiele ist vorgesehen, dass zum Ausbilden einer Antriebsanordnung anstatt Antriebseinheiten 145, 148, 151; 1442, 1445 mit separaten Antriebsmotoren eine einzige Antriebseinheit mit einem einzigen Antriebsmotor oder weniger Antriebsmotoren als Antriebswellen mit jeweils einer Antriebswelle 130, 133, 136; 1409, 1412 zugeordneten Getrieben mit schaltbaren Kupplungen und mit zum Erzeugen der entsprechenden Geschwindigkeiten angepassten Untersetzungen beziehungsweise Übersetzungen vorgesehen sind.

Zweckmäßigerweise weisen die bei den anhand Fig. 1 bis Fig. 18 erläuterten Ausführungsbeispielen beziehungsweise bei der vorgenannten Abwandlung genannten Antriebseinheiten 145, 148, 151; 1442, 1445 hochpräzise Servomotoren auf, mit denen eine sehr präzise Positionierung der Zahnriemen 112, 115, 118; 1403, 1406 oder anderer Transportelemente wie spielfrei geführte Gliederketten geschaffen ist.

Bei einer weiteren nicht dargestellten Abwandlung der voranstehend erläuterten Ausführungsbeispiele laufen geschlossene Transportelemente jeweils um zwei Paare von Rollen um, die durch jeweils eine Antriebswelle einer Antriebsanordnung mit wahlweise verschiedenen Geschwindigkeiten drehbar sind. Dadurch lassen sich mit den Transportelementen verbundene Halteeinheiten gleichzeitig mit vier voneinander verschiedenen Geschwindigkeiten bewegen.

Gegenüber einer gebräuchlichen karussellartigen Ausbildung von Behandlungsstationen hat das Ausführungsbeispiel der Erfindung mit der linearen Ausgestaltung der Behandlungsstationen 172, 175, 178 den weiteren Vorteil, dass sich die einzelnen Behälter 103 im Rahmen einer Qualitätsprüfung sehr genau nachverfolgen lassen.

## Patentansprüche

1. Vorrichtung zum Behandeln von Behältern (103) mit einer Anzahl von in Abständen voneinander angeordneten Behandlungsstationen (172, 175, 178), an denen die Behälter (103) behandelbar sind, mit einer Anzahl von Halteeinheiten (106) für die zu behandelnden Behälter (103), mit einer Anzahl von Transportelementen (112, 115, 118; 1403, 1406), mit denen die Halteeinheiten (106) für einen Transport von einer Behandlungsstation (172, 175, 178) zu einer weiteren Behandlungsstation (172, 175, 178) in einer Transportrichtung (T) über einen Transportweg taktweise bewegbar sind, und mit einer Antriebsanordnung, mit der die Transportelemente (112, 115, 118; 1403, 1406) in der Transportrichtung (T) intermittierend bewegbar sind, wobei die Transportelemente (112, 115, 118; 1403, 1406) endlos ausgebildet sind sowie um jeweils wenigstens ein Paar Rollen (121, 124, 127) umlaufen und wobei die Halteeinheiten (106) dazu eingerichtet sind, in ihnen angeordnete Behälter (103) an einer Oberseite sowie an einer Unterseite der Vorrichtung gegen die Wirkung der Schwerkraft zu halten, **dadurch gekennzeichnet, dass** schaltbare Verbindungsanordnungen (109; 1415) vorhanden sind, mit denen die Halteeinheiten (106), die sich an den quer zu den Transportelementen (112, 115, 118; 1403, 1406) angeordneten, aktive Behandlungselemente aufweisenden Behandlungsstationen (172, 175, 178) befinden, im Stillstand der Transportelemente (112, 115, 118; 1403, 1406) wahlfrei lösbar mit verschiedenen Transportelementen (112, 115, 118; 1403, 1406) verbindbar sind, dass die Behandlungsdauern an und/oder die Abstände zwischen wenigstens zwei Behandlungsstationen (172, 175, 178) voneinander verschieden sind und dass die durch jeweils ein Transportelement 112, 115, 118; 1403, 1406) oder jeweils eine Gruppe von Transportelementen (112, 115, 118; 1403, 1406) während einer Zykluszeitdauer bereitgestellten spezifischen Transportwege, jeweilige Anzahl der taktweise zurückgelegten spezifischen Transportwege und/oder Geschwindigkeiten an die Behandlungsdauern und/oder Abstände derart angepasst sind, dass die Anzahl der während der Zykluszeitdauer passierenden Halteeinheiten (106) an jeder Behandlungsstation (172, 175, 178) gleich ist.

2. Vorrichtung nach Anspruch 1, **dadurch gekennzeichnet, dass** Behandlungsstationen (172, 175, 178) mit verschiedenen Anzahlen an Behandlungselementen bestückt sind.

3. Vorrichtung nach Anspruch 2, **dadurch gekennzeichnet, dass** wenigstens eine Behandlungseinheit (172, 175, 178) im Bereich außerhalb der Oberseite angeordnet ist.

4. Vorrichtung nach einem der Ansprüche 1 bis 3, **dadurch gekennzeichnet, dass** die Antriebsanordnung dazu eingerichtet, dass das taktweise Bewegen von Halteeinheiten (106) zwischen Behandlungsstationen (172, 175, 178) mit den Transportelementen (112, 115, 118; 1403, 1406) in einem Grundtakt oder in einem ganzzahligen Vielfachen des Grundtakts erfolgt, und dass jede Behandlungsdauer dem Grundtakt oder im Wesentlichen einem ganzzahligen Vielfachen des Grundtakts entspricht.

5. Vorrichtung nach einem der Ansprüche 1 bis 4, **dadurch gekennzeichnet, dass** die Antriebsanordnung wenigstens zwei Antriebseinheiten (145, 148, 151; 1442, 1445) aufweist, mit denen jeweils wenigstens ein Transportelement (112, 115, 118; 1403, 1406) mit wenigstens zwei voneinander verschiedenen Transportwegen und/oder Geschwindigkeiten bewegbar ist.

6. Vorrichtung nach Anspruch 5, **dadurch gekennzeichnet, dass** mit wenigstens einer Antriebseinheit (145, 148, 151; 1442, 1445) wenigstens zwei Transportelemente (112, 115, 118; 1403, 1406) mit einem gleichen Transportweg und/oder mit einer gleichen Geschwindigkeit bewegbar sind.

7. Vorrichtung nach Anspruch 5 oder Anspruch 6, **dadurch gekennzeichnet, dass** drei Antriebseinheiten (145, 148, 151) vorhanden sind, wobei mit jeder Antriebseinheit (145, 148, 151) wenigstens ein Transportelement (112, 115, 118; 1403, 1406) oder eine Gruppe von Transportelementen (112, 115, 118; 1403, 1406) antreibbar ist.

8. Vorrichtung nach einem der Ansprüche 5 bis 7, **dadurch gekennzeichnet, dass** jede Antriebseinheit (145, 148, 151; 1442, 1445) jeweils einen eigenen Antriebsmotor aufweist.

9. Vorrichtung nach einem der Ansprüche 5 bis 7, **dadurch gekennzeichnet, dass** jede Antriebseinheit jeweils ein Getriebe mit einer schaltbaren Kupplung aufweist, das mit einem Antriebsmotor für wenigstens zwei Antriebseinheiten gekoppelt ist.

10. Vorrichtung nach einem der Ansprüche 1 bis 9, **dadurch gekennzeichnet, dass** die Verbindungsanordnungen (109; 1415) Verbindungsmittel (521, 524, 527; 1615, 1618) aufweisen, die mit den Transportelementen (145, 148, 151; 1403, 1406) formschlüssig und/oder kraftschlüssig verbindbar sind.

11. Vorrichtung nach Anspruch 10, **dadurch gekennzeichnet, dass** die Verbindungsmittel Eingriffsstößel (521, 524, 527; 1615, 1618) umfassen, die über einen Steuernutschieber (169) oder über einen Kipphebel (1603) bewegbar sind.

12. Vorrichtung nach einem der Ansprüche 1 bis 11, **dadurch gekennzeichnet, dass** die Abstände zwischen Behandlungsstationen (172, 175, 178) in Transportrichtung (T) verschieden sind.

13. Verfahren zum Behandeln von Behältern (103) mit den Schritten
- Bereitstellen einer Vorrichtung nach einem der Ansprüche 1 bis 12,
- Anordnen von Behältern (103) in Halteeinheiten (106),
- Verbinden wenigstens einer Halteeinheit (106) mit wenigstens einem Transportelement (112, 115, 118; 1403, 1406) und Bewegen der oder jeder mit diesem Transportelement (112, 115, 118; 1403, 1406) oder mit diesen Transportelementen (112, 115, 118; 1403, 1406) verbundenen Halteeinheit (106) über einen ersten Transportweg mit einer ersten Geschwindigkeit zu einer Behandlungsstation (172, 175, 178) mit einer ersten Behandlungsdauer,
- Verbinden wenigstens einer Halteeinheit (106) mit wenigstens einem weiteren Transportelement (112, 115, 118; 1403, 1406) und Bewegen der oder jeder mit diesem oder jedem weiteren Transportelement (112, 115, 118; 1403, 1406) verbundenen Halteeinheit (106) mit einem von dem ersten Transportweg verschiedenen zweiten Transportweg und/oder mit einer von der ersten Geschwindigkeit verschiedenen zweiten Geschwindigkeit zu einer weiteren Behandlungsstation (172, 175, 178) mit einer von der ersten Behandlungsdauer verschiedenen zweiten Behandlungsdauer und
- Behandeln von in diesen Halteeinheiten (106) angeordneten Behältern (103) mit den jeweiligen Behandlungsdauern,
- wobei die Transportwege, die jeweilige Anzahl der taktweise zurückgelegten spezifischen Transportwege und/oder Geschwindigkeiten so aufeinander abgestimmt sind, dass innerhalb einer Zykluszeitdauer eine vollständige Behandlung aller Behälter (103) an den Behandlungsstationen (172, 175, 178) erfolgt.

14. Verfahren nach Anspruch 13, **dadurch gekennzeichnet, dass** wenigstens ein Transportelement (112, 115, 118) zwischen Behandlungsstationen (172, 175, 178) mit verschiedenen Transportwegen, verschiedenen Anzahlen an taktweise zurückgelegten spezifischen Transportwegen und verschiedenen Geschwindigkeiten bewegt wird.

15. Verfahren nach Anspruch 13 oder Anspruch 14, **dadurch gekennzeichnet, dass** die Verbindungsanordnungen (109; 1415) bei Stillstand des oder jedes Transportelements (112, 115, 118; 1403, 1406) geschaltet werden, mit dem eine Verbindung hergestellt oder gelöst wird.

## Claims

1. Apparatus for treating containers (103), having a number of spaced apart treatment stations (172, 175, 178), at which the containers (103) can be treated, having a number of holding units (106) for the containers (103) to be treated, having a number of transport elements (112, 115, 118; 1403, 1406), by which the holding units (106) can be cyclically moved in a transport direction (T) via a transport path for transport from one treatment station (172, 175, 178) to a further treatment station (172, 175, 178), and having a drive arrangement, by which the transport elements (112, 115, 118; 1403, 1406) can be intermittently moved in the transport direction (T), wherein the transport elements (112, 115, 118; 1403, 1406) are continuously formed and each run around at least one pair of rollers (121, 124, 127), and wherein the holding units (106) are configured to hold containers (103) arranged therein at a top side and a bottom side of the apparatus against the effect of gravity, **characterized in that** there are switchable connection arrangements (109; 1415), by which, upon standstill of the transport elements (112, 115, 118; 1403, 1406), the holding units (106) located at the treatment stations (172, 175, 178) arranged transversely to the transport elements (112, 115, 118; 1403, 1406) and comprising active treatment elements can be optionally releasably connected to different transport elements (112, 115, 118; 1403, 1406), **in that** the treatment durations at and/or the spacings between at least two treatment stations (172, 175, 178) differ from each other, and **in that** the specific transport paths, the respective number of cyclically travelled specific transport paths and/or speeds provided by one respective transport element 112, 115, 118; 1403, 1406) or one respective group of transport elements (112, 115, 118; 1403, 1406) during one cycle period are matched to the treatment durations and/or spacings such that the number of holding units (106) passing during the cycle period is the same at each treatment station (172, 175, 178).

2. Apparatus according to Claim 1, **characterized in that** the treatment stations (172, 175, 178) are equipped with different numbers of treatment elements.

3. Apparatus according to Claim 2, **characterized in that** at least one treatment unit (172, 175, 178) is arranged in the area outside the top side.

4. Apparatus according to one of Claims 1 to 3, **characterized in that** the drive arrangement is configured for the cyclical movement of holding units (106) between treatment stations (172, 175, 178) by the transport elements (112, 115, 118; 1403, 1406) to occur at a basic clock rate or at an integral multiple of the basic clock rate, and for each treatment duration to correspond to the basic clock rate or essentially an integral multiple of the basic clock rate.

5. Apparatus according to one of Claims 1 to 4, **characterized in that** the drive arrangement comprises at least two drive units (145, 148, 151; 1442, 1445), by each of which at least one transport element (112, 115, 118; 1403, 1406) can be moved with at least two different transport paths and/or speeds.

6. Apparatus according to Claim 5, **characterized in that** at least two transport elements (112, 115, 118; 1403, 1406) can be moved with a same transport path and/or with a same speed by at least one drive unit (145, 148, 151; 1442, 1445).

7. Apparatus according to Claim 5 or Claim 6, **characterized in that** there are three drive units (145, 148, 151), wherein at least one transport element (112, 115, 118; 1403, 1406) or one group of transport elements (112, 115, 118; 1403, 1406) can be driven by each drive unit (145, 148, 151).

8. Apparatus according to one of Claims 5 to 7, **characterized in that** each drive unit (145, 148, 151; 1442, 1445) has a respective dedicated drive motor.

9. Apparatus according to one of Claims 5 to 7, **characterized in that** each drive unit has a respective transmission having a switchable clutch, the transmission being coupled to a drive motor for at least two drive units.

10. Apparatus according to one of Claims 1 to 9, **characterized in that** the connection arrangements (109; 1415) comprising connection means (521, 524, 527; 1615, 1618), which can be positively and/or frictionally connected to the transport elements (145, 148, 151; 1403, 1406).

11. Apparatus according to Claim 10, **characterized in that** the connection means include engagement rams (521, 524, 527; 1615, 1618), which can be moved via a control groove slider (169) or via a rocker arm (1603).

12. Apparatus according to one of Claims 1 to 11, **characterized in that** the spacings between treatments stations (172, 175, 178) differ from each other in the transport direction (T).

13. Method of treating containers (103) having the following steps:
- providing an apparatus according to one of Claims 1 to 12,
- arranging containers (103) in holding units (106),
- connecting at least one holding unit (106) to at least one transport element (112, 115, 118; 1403, 1406) and moving the or each holding unit (106) connected to said transport element (112, 115, 118; 1403, 1406) or to said transport elements (112, 115, 118; 1403, 1406) to a treatment station (172, 175, 178) having a first treatment duration via a first transport path with a first speed,
- connecting at least one holding unit (106) to at least one further transport element (112, 115, 118; 1403, 1406) and moving the or each holding unit (106) connected to said or each further transport element (112, 115, 118; 1403, 1406) to a further treatment station (172, 175, 178) having a second treatment duration different from the first treatment duration with a second transport path different from the first transport path and/or a second speed different from the first speed, and
- treating containers (103) arranged in said holding units (106) with the respective treatment durations,
- wherein the transport paths, the respective number of cyclically travelled specific transport paths and/or speeds are synchronised such that a complete treatment of all containers (103) at the treatment stations (172, 175, 178) occurs within one cycle period.

14. Method according to Claim 13, **characterized in that** at least one transport element (112, 115, 118) is moved between treatment stations (172, 175, 178) with different transport paths, different numbers of cyclically travelled specific transport paths and different speeds.

15. Method according to Claim 13 or Claim 14, **characterized in that** the connection arrangements (109; 1415) are switched upon standstill of the or each transport element (112, 115, 118; 1403, 1406), to which a connection is made or released.

## Revendications

1. Dispositif de manutention de récipients (103), comprenant un nombre de postes de manutention (172, 175, 178) espacés les uns des autres, dans lesquels les récipients (103) peuvent être manutentionnés, un nombre d'unités de maintien (106) pour les récipients (103) à manutentionner, un nombre d'éléments de transport (112, 115, 118 ; 1403, 1406), avec lesquels les unités de maintien (106) peuvent être déplacées en cadence pour un transport d'un poste de manutention (172, 175, 178) à un autre poste de manutention (172, 175, 178) dans une direction de transport (T) sur un trajet de transport, et un ensemble d'entraînement, avec lequel les éléments de transport (112, 115, 118 ; 1403, 1406) peuvent être déplacés par intermittence dans la direction de transport (T), les éléments de transport (112, 115, 118 ; 1403, 1406) étant réalisés sans fin et tournant chacun autour d'au moins une paire de rouleaux (121, 124, 127), et les unités de maintien (106) étant conçues pour maintenir des récipients (103) disposés dans celles-ci sur une face supérieure ainsi que sur une face inférieure du dispositif contre l'effet de la force de gravité, **caractérisé en ce qu'il** existe des ensembles de liaison commutables (109 ; 1415) avec lesquels les unités de maintien (106), qui se trouvent sur les postes de manutention (172, 175, 178) disposés transversalement aux éléments de transport (112, 115, 118 ; 1403, 1406) présentant des éléments de manutention actifs, à l'arrêt des éléments de transport (112, 115, 118 ; 1403, 1406), peuvent être reliés de manière détachable au choix à différents éléments de transport (112, 115, 118 ; 1403, 1406), **en ce que** les durées de manutention à et/ou les distances entre au moins deux postes de manutention (172, 175, 178) sont différentes les unes des autres et **en ce que** les trajets de transport spécifiques fournis par respectivement un élément de transport 112, 115, 118 ; 1403, 1406) ou respectivement par un groupe d'éléments de transport (112, 115, 118 ; 1403, 1406) pendant une durée de cycle, le nombre respectif des trajets de transport spécifiques parcourus de manière cadencée et/ou les vitesses sont adaptés aux durées de manutention et/ou aux distances de telle sorte que le nombre d'unités de maintien (106) passant pendant la durée de cycle est identique à chaque poste de manutention (172, 175, 178).

2. Dispositif selon la revendication 1, **caractérisé en ce que** des postes de manutention (172, 175, 178) sont équipées de différents nombres d'éléments de manutention.

3. Dispositif selon la revendication 2, **caractérisé en ce qu'**au moins une unité de manutention (172, 175, 178) est disposée dans la zone à l'extérieur de la face supérieure.

4. Dispositif selon l'une des revendications 1 à 3, **caractérisé en ce que** l'ensemble d'entraînement est conçu pour que le déplacement cadencé d'unités de maintien (106) entre des postes de manutention (172, 175, 178) avec les éléments de transport (112, 115, 118 ; 1403, 1406) s'effectue selon une cadence de base ou selon un multiple entier de la cadence de base, et **en ce que** chaque durée de manutention correspond à la cadence de base ou essentiellement à un multiple entier de la cadence de base.

5. Dispositif selon l'une des revendications 1 à 4, **caractérisé en ce que** l'ensemble d'entraînement présente au moins deux unités d'entraînement (145, 148, 151 ; 1442, 1445) avec lesquelles respectivement au moins un élément de transport (112, 115, 118 ; 1403, 1406) peut être déplacé avec au moins deux trajets de transport et/ou vitesses différents les uns des autres.

6. Dispositif selon la revendication 5, **caractérisé en ce qu'**au moins une unité d'entraînement (145, 148, 151 ; 1442, 1445) permet de déplacer au moins deux éléments de transport (112, 115, 118 ; 1403, 1406) avec un même trajet de transport et/ou une même vitesse.

7. Dispositif selon la revendication 5 ou la revendication 6, **caractérisé en ce que** trois unités d'entraînement (145, 148, 151) sont présentes, chaque unité d'entraînement (145, 148, 151) permettant d'entraîner au moins un élément de transport (112, 115, 118 ; 1403, 1406) ou un groupe d'éléments de transport (112, 115, 118 ; 1403, 1406).

8. Dispositif selon l'une des revendications 5 à 7, **caractérisé en ce que** chaque unité d'entraînement (145, 148, 151 ; 1442, 1445) présente respectivement un moteur d'entraînement propre.

9. Dispositif selon l'une des revendications 5 à 7, **caractérisé en ce que** chaque unité d'entraînement présente respectivement une transmission avec un embrayage commutable, qui est couplée à un moteur d'entraînement pour au moins deux unités d'entraînement.

10. Dispositif selon l'une des revendications 1 à 9, **caractérisé en ce que** les ensembles de liaison (109 ; 1415) présentent des moyens de liaison (521, 524, 527 ; 1615, 1618) qui peuvent être reliés aux éléments de transport (145, 148, 151 ; 1403, 1406) par complémentarité de formes et/ou par adhérence.

11. Dispositif selon la revendication 10, **caractérisé en ce que** les moyens de liaison comprennent des poussoirs d'engrenage (521, 524, 527 ; 1615, 1618) qui peuvent être déplacés par l'intermédiaire d'un tiroir de commande (169) ou par l'intermédiaire d'un culbuteur (1603).

12. Dispositif selon l'une des revendications 1 à 11, **caractérisé en ce que** les distances entre des postes de manutention (172, 175, 178) sont différentes dans la direction de transport (T).

13. Procédé de manutention de récipients (103) comprenant les étapes suivantes
- fourniture d'un dispositif selon l'une des revendications 1 à 12,
- disposition des récipients (103) dans des unités de maintien (106),
- liaison d'au moins une unité de maintien (106) à au moins un élément de transport (112, 115, 118 ; 1403, 1406) et déplacement de celle-ci ou de chaque unité de maintien (106) reliée à cet élément de transport (112, 115, 118 ; 1403, 1406) ou à ces éléments de transport (112, 115, 118 ; 1403, 1406) sur un premier trajet de transport à une première vitesse vers un poste de manutention (172, 175, 178) avec une première durée de manutention,
- liaison d'au moins une unité de maintien (106) à au moins un autre élément de transport (112, 115, 118 ; 1403, 1406) et déplacement de celle-ci ou de chaque unité de maintien (106) reliée à celui-ci ou à chaque autre élément de transport (112, 115, 118 ; 1403, 1406) avec un deuxième trajet de transport différent du premier trajet de transport et/ou avec une deuxième vitesse différente de la première vitesse vers un autre poste de manutention (172, 175, 178) avec une deuxième durée de manutention différente de la première durée de manutention et
- manutention de récipients (103) disposés dans ces unités de maintien (106) avec les durées respectives de manutention,
- les trajets de transport, le nombre respectif des trajets de transport spécifiques parcourus de manière cadencée et/ou les vitesses étant adaptés les uns aux autres de telle sorte qu'une manutention complète de tous les récipients (103) soit effectuée aux postes de manutention (172, 175, 178) en l'espace d'une durée de cycle.

14. Procédé selon la revendication 13, **caractérisé en ce qu'**au moins un élément de transport (112, 115, 118) est déplacé entre des postes de manutention (172, 175, 178) avec différents trajets de transport, différents nombres de trajets de transport spécifiques parcourus de manière cadencée et différentes vitesses.

15. Procédé selon la revendication 13 ou la revendication 14, **caractérisé en ce que** les ensembles de liaison (109 ; 1415) sont commutés à l'arrêt de l'élément de transport ou de chaque élément de transport (112, 115, 118 ; 1403, 1406) avec lequel une liaison est établie ou rompue.
